# EUROPÄISCHE PATENTSCHRIFT

(11) **EP 2 240 364 B1**
(45) Veröffentlichungstag und Bekanntmachung des Hinweises auf die Patenterteilung: **10.04.2013**
(21) Anmeldenummer: 09708578.1
(22) Anmeldetag: 07.01.2009
(51) Int. Cl.: B64C 1/18

(54) **FUSSBODENSYSTEM FÜR EINE RUMPFZELLE EINES FLUGZEUGS**
FLOOR SYSTEM FOR A FUSELAGE SECTION OF AN AIRCRAFT
SYSTÈME DE PLANCHER DE COMPARTIMENT DU FUSELAGE D'UN AVION

(30) Priorität: 07.02.2008 DE 102008007838; 07.02.2008 US 63896
(43) Veröffentlichungstag der Anmeldung: 20.10.2010
(73) Patentinhaber: Airbus Operations GmbH, 21129 Hamburg (DE)
(72) Erfinder: HAACK, Cord, 21643 Beckdorf (DE); SCHUMACHER, Markus, 21614 Buxtehude (DE); MUIN, Andrew, 21698 Harsefeld (DE); SCOLEY, Ian, 22559 Hamburg (DE)
(74) Vertreter: Isarpatent
(86) Internationale Anmeldenummer: PCT/EP2009/050128
(87) Internationale Veröffentlichungsnummer: WO 2009/098098

(56) Entgegenhaltungen:
- EP-A1- 1 473 222
- WO-A-2007/141291
- DE-A1- 3 141 869
- DE-A1-102006 019 123
- US-A1- 2008 078 129
- US-B1- 6 659 402

## Beschreibung

Die Erfindung betrifft ein komplexes Fußbodensystem für eine Rumpfzelle eines Flugzeugs mit einer Vielzahl von Bodenelementen zur Bildung einer Fußbodenfläche.

Heutige Passagierflugzeuge verfügen aus Gründen des Komforts und aufgrund großer Einsatzhöhen zur Verbrauchsoptimierung im Allgemeinen über druckfeste Rumpfzellen, deren Innendruck bei einer Flughöhe von beispielsweise 12.000 m einem Luftdruck entspricht, der in etwa 1.800 m herrscht. Die Rumpfzelle eines Flugzeugs wird mit einer Vielzahl von hintereinander angeordneten und durch Querstoßlaschen verbundenen, im Wesentlichen tonnenförmigen Rurnpfsektionen gebildet. Jede Rumpfsektion ist mit einer Vielzahl von hintereinander angeordneten Ringspanten gebildet, die außenseitig mit einer Rumpfzellenhaut beplankt sind. Zwischen den Ringspanten verlaufen in Richtung einer Längsachse des Flugzeugs Längsversteifungselemente, insbesondere Stringer, die bevorzugt gleichmäßig parallel zueinander beabstandet über den Umfang der Rumpfsektion innenseitig auf der Rumpfzellenhaut befestigt sind. Der Spantabstand einer Rumpfzelle beträgt in Abhängigkeit vom Flugzeugtyp und den strukturellen Belastungen zwischen 50 cm und 100 cm. Die Stringer, die Ringspanten, die Rumpfzellenhaut, die Querstoßlaschen sowie weitere Komponenten der Rumpfzellenstruktur sind im Allgemeinen mit einem Aluminiumlegierungsmaterial gebildet. Alternativ können einzelne Komponenten ("Hybridbauweise°) oder sämtliche Komponenten mit faserverstärkten Kunststoffmaterialien, beispielsweise kohlefaserverstärkten Epoxidharzen hergestellt sein.

Ein Fußboden des Passagierraums wird unter anderem durch eine Vielzahl von Querträgern gebildet, die in der Regel beidseitig mit jeweils einem Ringspant verbunden sind. Die Querträger sind in der Regel beidseitig nach unten mit so genannten Samerstangen oder anderen Vertikalstreben abgefangen, deren eines Ende mit einem Querträgerende und deren anderes Ende mit einem Ringspant verbunden ist. Auf den Querträgern ist eine Vielzahl von Längsprofilen befestigt, die als Sitzschienenprofile zur Aufnahme der Bestuhlung ausgebildet sein können. Zwischen den Sitzschienenprofilen werden zur Schaffung eines durchgehenden, begehbaren und ebenen Fußbodens Fußbodenplatten eingelegt und befestigt. Die Fußbodenplatten sind in der Regel mit Sandwichplatten gebildet, die mit faserverstärkten Kunststoffen hergestellt werden. Der Fußboden unterteilt die Rumpfzelle des Flugzeugs horizontal in den Passagierraum bzw. die Passagierkabine und in den darunter liegenden Frachtraum.
In den meisten Fällen wird die Innenausstattung einer Rumpfzelle eines Flugzeugs über die gesamte Lebensdauer hinweg, die bis zu 30 Jahre betragen kann, nicht mehr verändert. Eine Ausnahme stellt allenfalls die verbreitet stattfindende Umrüstung von Passagierflugzeugen in Frachtflugzeuge dar, die vom Umrüstaufwand her allerdings nahezu mit einem Neubau vergleichbar ist.

Die Sitzschienenprofile müssen in Unfallsituationen des Flugzeugs in Extremfällen mechanischen Kräften in einem Bereich von bis zu 20 g in Flugrichtung standhalten können, so dass die Sitzschienenprofile statisch massiv und demzufolge entsprechend schwer dimensioniert werden müssen, was sich nachhaltig auf die Nutzlast des Flugzeugs auswirkt.

Darüber hinaus gestaltet sich unter anderem die Anordnung von Passagiersitzen auf herkömmlichen Fußbodensystemen unflexibel, wodurch eine Anpassung an kundenspezifische Ausstattungswünsche erschwert wird. Beispielsweise erfordert die Umrüstung einer bestehenden Sitzanordnung von 2 x 3 Sitzreihen mit einem Gang in eine Sitzanordnung mit 3 x 2 Sitzreihen und zwei Gängen einen erheblichen Umrüstaufwand, da das gesamte Fußbodengerüst des Fußbodens umgebaut werden muss. Alternativ wäre es möglich, zusätzliche Sitzschienenprofile zur Abdeckung von derartigen Ausstattungsvariationen vorzusehen, die jedoch gewichtserhöhend wirken. Bestehende Passagiersitze mit in der Regel vier Beinstreben, an deren Enden die Befestigungspunkte für die Sitzschienenprofile angebunden sind, können aufgrund der auftretenden Lasten in einer Unfallsituation nicht an beliebigen Positionen entlang der Flugzeuglängsachse auf den Sitzschienenprofilen befestigt werden.

Die DE 10 2006 019 123 A1 beschreibt eine Bodenstruktur für einen Rumpf, beinhaltend mehrere Querträger, denen jeweils mindestens eine erste Strebe und mindestens eine zweite Strebe für eine Anbindung des jeweiligen Querträgers an den Rumpf zugeordnet sind, wobei die mindestens eine Strebe in entsprechend einem ersten Richtungsvektor und die mindestens zweite Strebe entsprechend einem zweiten Richtungsvektor ausgerichtet sind und wobei sich die Projektionen des ersten Richtungsvektors und des zweiten Richtungsvektors auf die Rumpflängsrichtung für eine Aufnahme einer in Rumpflängsrichtung auf die Bodenstruktur einwirkenden Kraft durch die ersten und zweiten Streben unterscheiden.

Aufgabe der Erfindung ist es, die vorstehend beschriebenen Nachteile der bekannten Ausführungsformen von Fußbodensystemen im Hinblick auf Ausstattungsvarianten in der Passagierkabine zu vermeiden.

Diese Aufgabe wird durch ein Fußbodensystem mit den Merkmalen des Patentanspruchs 1 gelöst.

Dadurch, dass das Fußbodensystem im Wesentlichen selbsttragend ausgebildet ist und mechanisch weitgehend von der Rumpfzelle als Primärstruktur entkoppelt ist, kann das Fußbodensystem weitgehend unabhängig von Statikanforderungen bzw. strukturellen Randbedingungen der Rumpfzelle modifiziert werden. Hierdurch wird es erstmals möglich, eine Ausstattung einer Passagierkabine eines Flugzeugs mit einem geringen Umrüstaufwand an kundenspezifische Sonderwünsche anzupassen. Die vom Fußbodensystem ausgehenden mechanischen Lasten werden im Wesentlichen ausschließlich in die Rumpfzelle bzw. in die Rumpfzellenstruktur eingeleitet, während umgekehrt von der Rumpfzelle nahezu keine Kräfte in das selbsttragende Fußbodensystem übergeleitet werden. In einem unteren Bereich der Rumpfzelle sind mindestens zwei Längsträger befestigt, auf denen jeweils mindestens ein Stützelement, insbesondere mindestens eine fachwerkartige Verstrebung, angeordnet ist, wobei auf den mindestens zwei gegenüberliegenden Stützelementen jeweils mindestens ein Querträger zur Auflage und Befestigung der Bodenelemente angeordnet ist.
Hierdurch werden vom Fußbodensystem parallel zu einer Flugzeughochachse (z-Achse) ausgehende Lasten in statisch vorteilhafter Weise über die Stützelemente unmittelbar in bevorzugt zwei, beidseitig gleichmäßig parallel beabstandet zu einer Basislinie bzw. Scheitellinie der Rumpfzelle sowie parallel zur x-Achse verlaufende, vorzugsweise durchgehende, untere (Basis-)Längsträger eingeleitet, die in einem unteren Bereich der Rumpfzelle (so genannte "Bilge") innerhalb des Frachtraums befestigt sind. Beide Längsträger können in einer alternativen Ausführungsform auch mit ungleichen Abständen parallel verlaufend zur Basislinie bzw. der Scheitellinie der Rumpfzelle in dieser befestigt sein. Die Basislinie bzw. die Scheitellinie verläuft durch den untersten bzw. höchsten Punkt einer durch die Querschnittsgeometrie der Rumpfzelle definierten Form, die im einfachsten Fall ein Kreis ist. Die Querschnittsgeometrie kann entlang einer Flugzeuglängsachse (x-Achse) in Flugrichtung abschnittsweise variieren.
Auf den Stützelementen sind jeweils parallel zu einer Flugzeugquerachse (y-Achse) parallel beabstandet zueinander verlaufende Querträger befestigt Auf den Querträgern sind wiederum parallel zur x-Achse des Flugzeugs verlaufende Längsprofile befestigt, die vorzugsweise als Sitzschienenprofile ausgestaltet sind und auf denen Bodenelemente mit fakultativen Funktionselementen zur Schaffung eines Fußbodens in der Rumpfzelle angeordnet sind. Die Befestigung der Bodenelemente auf den Sitzschienenprofilen kann mit denselben Standardbeschlägen erfolgen, die üblicherweise in der Zivilluftfahrt für die Befestigung der Bestuhlung in Passagierkabinen Verwendung finden. Alternativ kann jede Art von Niet-, Schraub-, Klemm- oder Steckelementen zum Einsatz kommen. Darüber hinaus können gegebenenfalls auch Schweiß- oder Klebeverbindungen Anwendung finden.
Jedes Stützelement auf den unteren Längsträgern ist im einfachsten Fall als eine feste Vertikalstrebe oder als längenverstellbare Samerstange ausgebildet, die im normalen Flugzustand primär die vom Fußboden parallel zur z-Achse auftretenden Kräfte aufnimmt. Aus statischen Gründen wird es jedoch in der Regel erforderlich sein, jeweils zwei benachbarte Vertikalstreben durch zusätzliche Diagonalstreben fachwerkartig auszusteifen, um auch Kräfte, die im Wesentlichen parallel zur x-Achse auftreten, in die unterseitig angeordneten Längsträger einzuleiten. Es ist in der Regel nicht erforderlich, im Bereich eines jeden Ringspants eine Vertikalstrebe vorzusehen. Vielmehr ist es im Allgemeinen ausreichend, lediglich eine Vertikalstrebe an jedem fünften bis zehnten Ringspant anzuordnen.
In einer Ausführungsvariante erstreckt sich auf jedem der beiden unteren Längsträger ein derartiges fachwerkartiges Stützelement über eine Gesamtlänge der Längsträger hinweg mit gleichbleibender Höhe. Alternativ können die Stützelemente als einzelne, zueinander beabstandet auf den Längsträgern angeordnete, freistehende Stützelemente ("Böcke") ausgestaltet sein.
Ferner können die Stützelemente nach oben hin bevorzugt über jeweils einen durchgehenden, oberen Längsträger verfügen, der im Wesentlichen parallel zu den beiden im unteren Bereich der Rumpfzelle angeordneten Längsträgern verläuft. Auf den oberen Längsträgern werden dann parallel zur y-Achse Querträger und auf diese wiederum parallel zur x-Achse Längsprofile zur Auflage und Befestigung von Bodenplatten zur Schaffung einer Fußbodenfläche angeordnet.
Optional können jeweils an den oberen Enden jeweils benachbarter Vertikalstreben jeweils horizontal verlaufende Längsstreben mit einem im Vergleich zu den Längsträgern kleineren Biegemoment vorgesehen sein, die in Verbindung mit den gegebenenfalls vorgesehenen Diagonalstreben eine fachwerkartige Struktur der Stützelemente bilden. Bei einer ausreichenden Eigensteifigkeit der Sitzschienenprofile bzw. der Bodenelemente kann gegebenenfalls zumindest teilweise auf die Längsstreben verzichtet werden.
In einer weiteren Ausführungsalternative können die Querträger unmittelbar mit den oberen Enden der Vertikalstreben verbunden sein, wobei eine Stabilisierung der gesamten Anordnung gegenüber parallel zur x-Achse wirkenden Kräften durch die auf den Querträgern aufliegenden und befestigten Bodenelemente erfolgt.
Infolge der erfindungsgemäß mechanisch weitgehend von der Rumpfzelle entkoppelten Konstruktion des Fußbodens können selbst umfangreiche Änderungen am Fußboden ohne Rücksicht auf etwaige statische Erfordernisse der Rumpfzelle vorgenommen werden, wodurch die Anpassung an kundenspezifische Ausstattungswünsche vereinfacht wird.

Nach Maßgabe einer weiteren vorteilhaften Ausgestaltung des Fußbodensystems ist vorgesehen, dass die Stützelemente unterschiedliche fixe Höhen in Relation zu einer z-Achse (Flugzeughochachse) aufweisen.
Hierdurch wird es erstmals möglich, einen Fußboden in einer Rumpfzelle eines Passagier- oder Frachtflugzeugs zu schaffen, der keine sich über die gesamte Länge des Flugzeugs erstreckende Ebene darstellt. Zum Beispiel kann in einem vorderen Bereich der Rumpfzelle der Fußboden angehoben werden, um den Frachtraum zu vergrößern, während in einem hinteren Bereich der Rumpfzelle der Fußboden unter Bildung eines Absatzes abgesenkt wird, um den Reisekomfort für die Passagiere infolge eines vergrößerten Kabinenvolumens zu erhöhen.

Nach einer weiteren vorteilhaften Ausgestaltung des Fußbodensystems ist vorgesehen, dass die Stützelemente parallel zur z-Achse höhenverstellbar sind. Hierdurch wird die Flexibilität des Fußbodensystems gegenüber Änderungswünschen am Fußbodenlayout weiter gesteigert, da eine Anpassung des Fußbodenniveaus bereichsweise durch eine bevorzugt motorisch oder manuell erfolgende Höhenverstellung der betreffenden Stützelemente bewirkt wird. Ein Verschieben von Stützelementen mit unterschiedlicher Höhe auf dem betreffenden Längsträger ist nicht mehr erforderlich. Beispielsweise können die Stützelemente in diesem Fall als motorisch, zum Beispiel mittels eines elektromotorischen Spindelantriebs, betätigbare Scheren ("Scherenhubtisch") ausgebildet sein, um eine bevorzugt stufenlose Höhenverstellung zwischen den Längsträgern und den Querträgern zu bewirken. Derartige Scherenanordnungen mit gekreuzten Streben finden verbreitet bei so genannten "Scherentischen" bzw. Hubtischen Anwendung.

Nach Maßgabe einer weiteren Fortbildung des Fußbodensystems ist vorgesehen, dass die Stützelemente auf den Längsträgern parallel zu einer y-Achse verschiebbar und arretierbar sind.
Hierdurch wird es auf einfache Art und Weise ermöglicht, auf den Längsträgern die Position von höheren Stützelementen mit denen von niedrigeren Stützelementen durch Umsetzen bzw. Verschieben zu vertauschen, um das Layout des Fußbodens bei geringstmöglichem Umrüstaufwand umzugestalten. Die Längsträger weisen in dieser Ausführungsvariante bevorzugt im Bereich einer Oberseite eine schienenartige Führung auf, in der die Stützelementen parallel zur y-Achse (d.h. entlang der x-Achse) verschiebbar und festsetzbar aufgenommen sind. Hierbei können in den Führungen so genannte "Ausweichstellen" vorgesehen sein, um das aneinander Vorbeigleiten von Stützelementen ohne das Herausheben von Stützelementen aus den Führungen - zumindest bei abgehobenen Querträgern - zu ermöglichen. Die Stützelemente können hierbei wahlweise stufenlos oder gerastert auf den Längsträgern befestigbar sein.

Eine weitere vorteilhafte Fortbildung des Fußbodensystems sieht vor, dass mindestens ein Querträger auf mindestens zwei Stützelementen parallel zur y-Achse verschiebbar und arretierbar ist.

Hierdurch wird es möglich, den Fußboden zielgerichtet an geänderte Lastverhältnisse anzupassen. Zum Beispiel können Querträger in einen Bereich, in dem beispielsweise ein Küchenmodul ("Galley") und/oder ein Sanitärmodul auf dem Fußboden positioniert werden sollen, zur lokalen Verstärkung parallel zur y-Achse (d.h. entlang der x-Achse) verschoben und arretiert werden. In dieser Konstellation weisen die auf den Längsträgern befestigten Stützelemente jeweils einen durchgehenden, oberen Längsträger auf, auf denen die Enden der Querträger jeweils verschiebbar und arretierbar aufgenommen sind. Die Befestigung der Querträger auf den oberen Längsträgern erfolgt mittels bekannter, im Bedarfsfall wieder lösbarer Schraub-, Klemm- oder Steckverbindungselemente.

Nach Maßgabe einer Weiterbildung des Fußbodensystems ist vorgesehen, dass mindestens zwei Längsprofile, insbesondere mindestens zwei Sitzschienenprofile, auf mindestens zwei Querträgern parallel zur x-Achse verschiebbar und arretierbar sind, um darauf mindestens ein Funktionselement, insbesondere jeweils mindestens eine Sitzgruppe mit mundestens zwei Sitzen, zu befestigen.
Infolge der auf den Querträgern quer zur Flugzeuglängsachse (d.h. parallel zur x-Achse) verschiebbaren und fixierbaren Längsprofile kann das Layout einer Bestuhlung auf dem Fußboden leicht und schnell geändert werden. So ist es zum Beispiel möglich, durch das Verschieben der Längsprofile bzw. der Sitzschienenprofile und das Hinzufügen von zwei weiteren Längsprofilen eine Bestuhlung mit zwei Sitzreihen mit jeweils drei Sitzen und einem Mittelgang in eine Bestuhlung mit drei Sitzreihen mit jeweils zwei Sitzen und zwei Durchgängen zu überführen. Die Befestigung und Arretierung der Längsprofile auf den Querträgern erfolgt mittels geeigneter, im Bedarfsfall lösbarer Schraub-, Klemm- oder Steckverbindungselemente.

Eine weitere vorteilhafte Fortbildung des Fußbodensystems sieht vor, dass mindestens ein Stützelement zumindest abschnittsweise mittels mindestens einer Seitenanbindung, insbesondere einem Fachwerk, Dämpfern, Seilen oder Bändern, an die Rumpfzelle angebunden ist.
Hierdurch wird ein Verkippen der Stützelemente in Richtung der y-Achse unter Einwirkung von Querkräften verhindert. Zur seitlichen Ankopplung des Fußbodensystems an die Rumpfzelle bzw. die innenseitig in der Rumpfzelle befestigten Ringspanten können beispielsweise pneumatisch und/oder hydraulisch wirkende Dämpfungselemente dienen, deren Länge zum Toleranzausgleich vorzugsweise stufenlos einstellbar ist. Die Seile bzw. Bänder werden bevorzugt mit verflochtenen Kohlefasern bzw. Kohlefasersträngen gebildet. Das Fachwerk besteht bevorzugt aus in statischer Hinsicht vorteilhaft dreieckförmig angeordneten Verstärkungsstreben.

Nach Maßgabe einer weiteren vorteilhaften Fortbildung sind mindestens zwei gegenüberliegende Stützelemente gegenüber parallel zur y-Achse wirkenden Kräften, insbesondere mittels beidseitig angeordneten dreieckförmigen Verstrebungen im Bereich von überkragenden Enden eines auf den beiden Stützelementen aufliegenden Querträgers, versteift. Hierdurch wir das Fußbodensystem im Wesentlichen statisch unabhängig von der umgebenden Rumpfzelle, das heißt das vollständige Fußbodensystem einschließlich der Unterkonstruktion und dem darauf befindlichen Fußboden bzw. den Bodenelementen mit den Funktionselementen steht "frei" in der Rumpfzelle.

Nach einer weiteren vorteilhaften Ausgestaltung ist vorgesehen, dass mindestens zwei Längsträger in einem oberen Bereich der Rumpfzelle befestigt sind und jeweils mindestens ein Stützelement, insbesondere mindestens eine fachwerkartige Verstrebung, von jeweils einem Längsträger abgehängt ist und an den mindestens zwei Stützelementen jeweils mindestens ein Querträger zur Befestigung von Bodenelementen angeordnet ist.
Diese Ausgestaltung mit vom Scheitelbereich der Rumpfzelle "abgehängten" Bodenelementen stellt eine "invertierte" Ausführungsvariante des Fußbodensystems dar. Der Vorteil dieser Ausgestaltung liegt darin, dass die Stützelemente anstatt auf Druck parallel zur z-Achse im Wesentlichen nur auf Zug beansprucht werden, so dass die Stützelemente zumindest teilweise mit gewichtsreduzierenden Seilen oder Bändern gebildet sein können.

Bei einer Weiterbildung des Fußbodensystems ist vorgesehen, dass das mindestens eine Bodenelement mindestens ein Funktionselement, insbesondere einen Sitz, eine Sitzgruppe, ein Küchenmodul und/oder ein Sanitärmodul aufweist. Hierdurch wird im Vergleich zur konventionellen Befestigung von Baugruppen durch diskrete Anbindungspunkte eine gleichmäßigere über die Fläche des Bodenelements hinweg verteilte Lasteinleitung in das gesamte Fußbodensystem erzielt, wodurch eine statisch gewichtssparende Auslegung der Sitzschienenprofile und der Querträger möglich wird. In Abhängigkeit von der Eigensteifigkeit bzw. der Festigkeit einer Grundplatte des Bodenelements kann diese unter Umständen zumindest teilweise die statischen Aufgaben der Sitzschienenprofile und/oder der Querträger übernehmen, so dass diese im Idealfall völlig entbehrlich werden. Alternativ kann das Fußbodensystem bereichsweise mit Bodenelementen ohne Funktionselemente versehen sein.
Darüber hinaus lassen sich die Bodenelemente mit integrierten Funktionselementen räumlich flexibler auf dem Fußbodensystem positionieren und zudem mit einem geringeren Arbeitsaufwand montieren.

Weitere vorteilhafte Ausgestaltungen des Fußbodensystems sind in den weiteren Patentansprüchen dargelegt

In der Zeichnung zeigt:
- **Fig. 1**: Ein aus dem Stand der Technik bekanntes Fußbodengerüst für ein Flugzeug,
- **Fig. 2**: einen konventionellen Sitz für einen Passagier zur Befestigung auf dem Fußbodengerüst nach Fig. 1,
- **Fig. 3**: ein erfindungsgemäß ausgestaltetes Fußbodensystem,
- **Fig. 4**: eine Ausführungsvariante des Fußbodensystems,
- **Fig. 5**: eine weitere Ausführungsvariante des Fußbodensystems mit einer bereichsweise unterschiedlichen (festen) Höhe,
- **Fig. 6**: eine weitere alternative Ausführungsvariante des Fußbodensystems mit der Möglichkeit einer zumindest bereichsweisen Niveauverstellung,
- **Fig. 7**: eine Ausführungsvariante mit parallel zur x-Achse verschiebbaren Längsprofilen, insbesondere Sitzschienenprofilen,
- **Fig. 8**: zwei Sitzgruppen als fakultative Funktionselemente des Fußbodensystems,
- **Fig. 9**: eine Ausführungsvariante mit parallel zur y-Achse verschiebbaren und arretierbaren Querträgern,
- **Fig.10**: eine Ausführungsform mit parallel zur y-Achse verschiebbaren und arretierbaren ("bockförmigen") Stützelementen, und
- **Fig. 11**: ein "freistehendes" Fußbodensystem mit beidseitig überkragenden, zusätzlich verstrebten Querträgern,
- **Fig.12**: eine "inverse" Anordnung, das heißt abgehängte Ausführungsvariante des Fußbodensystems,
- **Fig. 13**: das Fußbodensystem mit zwei exemplarischen Bodenelementen,
- **Fig. 14**: ein Bodenelement mit einem Adapter zur Befestigung eines Funktionselements, insbesondere einer Sitzgruppe,
- **Fig. 15**: eine Ausführungsvariante eines stufenlos (in Richtung der x-Achse) verstellbaren Bodenelements,
- **Fig. 16**: ein Bodenelement mit einem Küchenmodul als Funktionselement,
- **Fig. 17**: ein Bodenelement mit einer Erhöhung (Podest) zur Befestigung einer Sitzgruppe mittels eines Zwischenstücks (Adapters), und
- **Fig. 18**: eine Sitzgruppe mit zwei Sitzen zur Befestigung auf dem Bodenelement nach Maßgabe der Fig. 17.

In Baugruppen, die jeweils eine größere Anzahl von funktional identischen Elementen aufweisen, wie zum Beispiel ein als Fachwerk ausgebildetes Stützelement oder dergleichen, wird aus Gründen der besseren Übersicht - sofern nicht ausdrücklich in der zugehörigen Figurenbeschreibung darauf hingewiesen ist - im Allgemeinen nur eine Bezugsziffer vergeben.

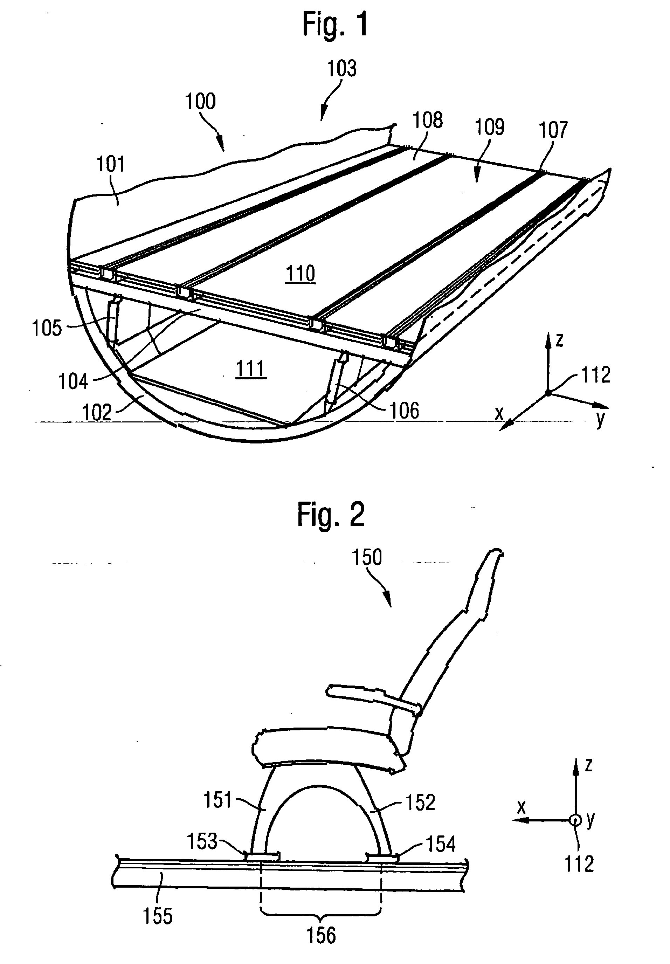

Die **Fig. 1** zeigt eine perspektivische Ansicht eines Fußbodensystems nach Maßgabe des Standes der Technik.
Eine Rumpfzelle 100 eines nicht dargestellten Flugzeugs mit einer im Wesentlichen kreisförmigen Querschnittsgeometrie umfasst unter anderem eine Rumpfzellenhaut 101 mit einer Vielzahl von darin angeordneten Ringspanten, von denen lediglich der vorderste Ringspant 102 mit einer Bezugsziffer versehen ist. Ein Fußbodensystem 103 der Rumpfzelle 100 umfasst unter anderem eine Vielzahl von Querträgern 104. Der Querträger 104 ist beidseitig mit einem Ringspant 102 verbunden. Zusätzlich ist der Querträger 104 nach unten mit zwei herkömmlichen Samerstangen 105,106 abgefangen, die zwischen dem Querträger 104 und dem Ringspant 102 angeordnet sind. Auf dem Querträger 104 sind ferner insgesamt vier Sitzschienenprofile befestigt, von denen lediglich ein Sitzschienenprofil 107 mit einer Bezugsziffer versehen ist. Auf den Sitzschienenprofilen 107 wird eine Bestuhlung für die Passagiere befestigt. Zwischen zwei Sitzschienenprofilen 107 ist jeweils eine Fußbodenplatte eingelegt und befestigt, von denen lediglich eine Fußbodenplatte 108 eine Bezugsziffer trägt. Die Fußbodenplatten bilden einen durchgehenden und ebenen Fußboden 109 innerhalb der Rumpfzelle 100, wodurch diese über ihre Längserstreckung hinweg in einen Passagierraum 110 und einen Frachtraum 111 unterteilt wird. Durch ein Koordinatensystem 112 wird in der Fig. 1 und in allen nachfolgenden Figuren die Orientierung der Komponenten im Raum veranschaulicht. Eine x-Achse des Koordinatensystems 112 entspricht einer Flugzeuglängsachse (in Flugrichtung), eine y-Achse entspricht einer Flugzeugquerachse und die z-Achse korrespondiert mit einer Hochachse des Flugzeugs, wobei die z-Achse vom Boden weggerichtet ist.

Die **Fig. 2** zeigt eine vereinfachte perspektivische Ansicht eines nach Maßgabe des Standes der Technik ausgeführten Sitzes zur Befestigung auf standardisierten Sitzschienenprofilen.
Ein Sitz 150 für einen Passagier verfügt über vier Beine bzw. Beinstreben mit jeweils einem endseitig angeordneten Befestigungspunkt, von denen lediglich die Beine 151 und 152 sowie die Befestigungspunkte 153 und 154 hier sichtbar sind. Die Arretierung des Sitzes 150 auf einem Sitzschienenprofil 155 erfolgt durch die Befestigungspunkte 153 und 154 mittels herkömmlicher Schraub-, Klemm- oder Steckverbinder in einem gerasterten Abstand von 2,54 cm. Ein Abstand 156 zwischen den Befestigungspunkten 153,154 parallel zur x-Achse reglementiert die Befestigungsmöglichkeiten für den Sitz, da im Bereich der Befestigungspunkte 153,154 aufgrund der hohen Lasten in Unfallsituationen möglichst Querträger (parallel zur y-Achse) verlaufen sollten. Darüber hinaus bildet der Abstand 156 in Verbindung mit einem nicht dargestellten Schwerpunkt des Sitzes 150 einen erheblichen Hebel, durch den hohe Kräfte in das Sitzschienenprofil 155 eingeleitet werden, das demzufolge entsprechend massiv ausgelegt werden muss.

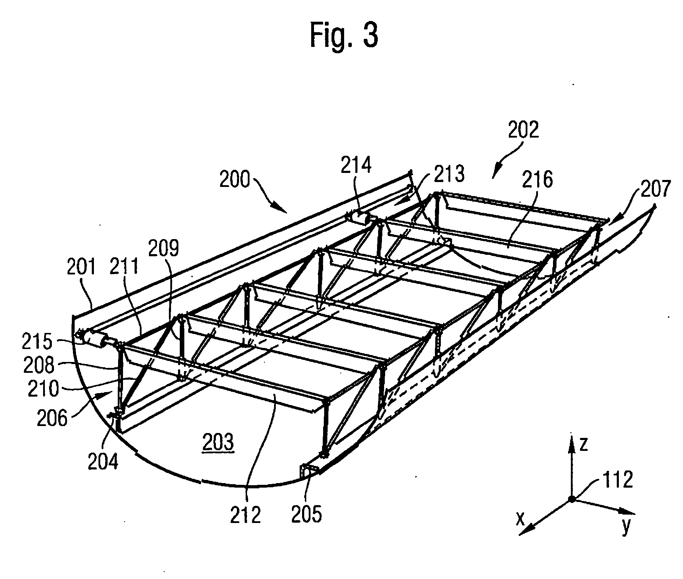

Die **Fig. 3** zeigt im Unterschied zu der Fig. 1 ein erfindungsgemäß ausgebildetes Fußbodensystem.
In einer Rumpfzelle 200 mit einer Rumpfzellenhaut 201 ist ein Fußbodensystem 202 integrierte Das Fußbodensptem 202 umfasst unter anderem zwei in einem unteren Bereich 203 der Rumpfzelle 200 parallel zueinander verlaufende Längsträger 204 und 205 (Podeste bzw. Basislängsträger). Auf jedem Längsträger 204,205 ist ein fachwerkartiges Stützelement 206,207 angeordnet, das sich im gezeigten Ausführungsbeispiel über die gesamte Länge jedes Längsträgers 204,205 hinweg erstreckt.
Die Stützelemente 206,207 weisen jeweils eine Vielzahl von Vertikalstreben auf, von denen zwei vordere Vertikalstreben 208,209 auf dem Längsträger 204 eine Bezugsziffer tragen. Zwischen den beiden Vertikalstreben 208,209 ist eine Diagonalstrebe 210 zur Versteifung angeordnet. Entsprechendes gilt für die restlichen Vertikalstreben. An oberen Enden der Vertikalstreben 208,209 - wie auch zwischen allen anderen jeweils benachbarten Vertikalstreben - ist jeweils eine Längsstrebe 211 angeordnet, die parallel zur x-Achse verläuft.
Die Vertikalstreben 208,209 können starr oder elastisch dämpfend ausgebildet sein. Im Fall einer starren Ausgestaltung der Vertikalstreben 208,209 sind diese beispielsweise mit Samerstangen gebildet, die allenfalls eine Längenverstellbarkeit parallel zur z-Achse erlauben. Alternativ können die Vertikalstreben 208,209 mit hydraulischen und/oder pneumatischen Dämpfungselementen, gegebenenfalls in Kombination mit Federelementen, gebildet sein. Infolge dieser Ausgestaltung werden unter anderem durch Turbulenzen induzierte Auf- und Abbewegungen des Flugzeugs, insbesondere parallel zur z-Achse, ausgeglichen, wodurch sich der Passagierkomfort erhöht. Alternativ können die hydraulischen und/oder pneumatischen Dämpfungselemente auch aktiv steuerbar sein, so dass die Fußbodenfläche des Fußbodensystems 202 ausgehend von beispielsweise ohnehin vorhandenen Daten des Flugrechners in Echtzeit aktiv in ihrer Lage im Raum, insbesondere in Relation zur xy-Ebene, aktiv stabilisiert werden kann. Zu diesem Zweck können die Vertikalstreben Aktuatoren aufweisen, die insbesondere parallel zur z-Achse verfahrbar sind. Jede Steuerbarkeit der Dämpfungselemente meint in diesem Zusammenhang, dass die Dämpfungselemente parallel zur z-Achse verfahrbar sind und darüber hinaus das Dämpfungs- und Federverhalten kontrolliert von einer Steuer- und Regeleinrichtung aktiv in Abhängigkeit von den aktuellen Flugdaten, die beispielsweise vom Flugrechner stammen können, einstellbar ist.
Auf den beidseitig in der Rumpfzelle 200 verlaufenden Stützelementen 206,207 liegt ferner eine Vielzahl von Querträgern auf, von denen lediglich ein Querträger 212 mit einer Bezugsziffer versehen ist. Der Abstand der Querträger zueinander in der x-Richtung entspricht bevorzugt den Spantabständen der nicht dargestellten Ringspante, die mit der Rumpfzellenhaut 201 verbunden sind.
Zur seitlichen Abstützung ist im gezeigten Ausführungsbeispiel der Fig. 3 eine exemplarisch einseitige (asymmetrische) Seitenanbindung 213 des Querträgers 212 an die Rumpfzelle 200 vorgesehen. Die einseitige Seitenanbindung 213 ist oberhalb des Längsträgers 204 am Stützelement 206 mit zwei bevorzugt längenverstellbaren Samerstangen 214,215 im Bereich des ersten Querträgers 212 und im Bereich des fünften Querträgers 216 gebildet, um insbesondere eine Stabilisierung des Fußbodensystems 202 gegenüber parallel zur y-Achse wirkenden Lasten zu erzielen. Eine derartige Seitenanbindung kann auch auf der Seite des zweiten Längsträgers 205 vorgesehen sein. In der Regel ist die Seitenanbindung 213 nur an jedem fünften bis zu jedem zehnten Querträger bzw. Ringspant erforderlich. Die Stabilisierung des Fußbodensystems 202 gegenüber parallel zur z-Achse wirkenden Lasten erfolgt im Wesentlichen durch die Vertikalstreben 208,209, während durch die Diagonalstreben 210 vor allem in Richtung der x-Achse wirkende Kräfte in die beiden Längsträger 204,205 eingeleitet werden.
Die Verbindung sämtlicher vorstehend beschriebener Komponenten kann mittels jeder Art von Niet-, Schraub-, Klemm- Steckelementen oder einer beliebigen Kombination hiervon erfolgen. Abweichend von den mechanischen Verbindungs- bzw. Befestigungsmitteln kann das Zusammenfügen der erwähnten Komponenten auch durch Schweißverfahren und/oder Klebeverfahren vollzogen werden.

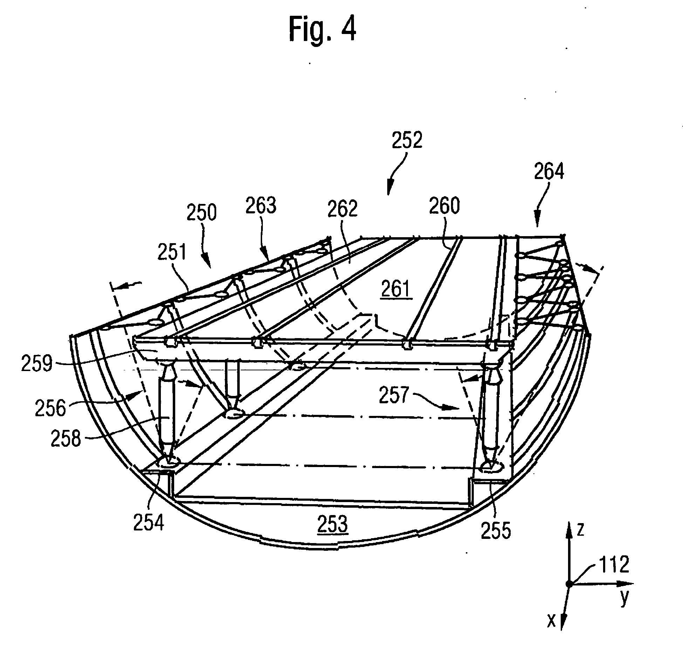

Die **Fig. 4** illustriert eine weitere Ausführungsvariante des Fußbodensystems mit einer beidseitigen Seitenanbindung.
In eine Rumpfzelle 250 mit einer Rumpfzellenhaut 251 ist eine weitere alternative Ausführungsform eines Fußbodensystems 252 eingebaut. In einem unteren Bereich 253 der Rumpfzelle 252 sind wiederum zwei parallel zur x-Achse verlaufende Längsträger 254,255 befestigt. Auf jedem der Längsträger 254,255 ruht jeweils ein Stützelement 256,257 mit einer Vielzahl von Vertikalstreben, von denen lediglich eine Vertikalstrebe 258 mit einer Bezugsziffer versehen ist. Im Übrigen entspricht der Aufbau der Stützelemente 256,257 dem Aufbau der Stützelemente 206,207 nach Maßgabe der Fig. 3. Auf den Stützelementen 256,257 ruht eine Vielzahl von Querträgern 259. Auf den Querträgern 259 verläuft eine Vielzahl von Sitzschienenprofilen, von denen ein Sitzschienenprofil die Bezugsziffer 260 aufweist. Um eine ebene, in sich geschlossene und begehbare Fußbodenfläche 261 zu bilden, liegt auf den Querträgern 259 eine Vielzahl von Bodenelementen auf, von denen lediglich ein Bodenelement 262 mit einer Bezugsziffer versehen ist.
Im Unterschied zu der Ausführungsform nach Maßgabe der Fig. 3 verfügt das Fußbodensystem 252 über zwei beidseitig (symmetrisch) angeordnete Seitenanbindungen 263,264, die exemplarisch mit diagonal zwischen dem Fußbodensystem 252 und der Rumpfzelle 250 verspannten Seilen bzw. Bändern gebildet sind. Die Seile bzw. die Bänder können beispielsweise mit verflochtenen Kohlefasern oder mit Kohlefasersträngen gebildet sein. Alternativ können sie über ein begrenztes Maß an Elastizität verfügen, um insbesondere Kräfte parallel zur y-Achse unter Vermeidung von Lastspitzen (so genannte "Lateral Impacts") besser auffangen und absorbieren zu können. Erforderlichenfalls müssen die elastischen Seile bzw. Bänder mit geeigneten hydraulischen und/oder pneumatischen Dämpfungselementen kombiniert werden, um unerwünschte Schwingungsphänomene abzumindern. Die Seile bzw. die Bänder können anstatt mit Kohlefasern beispielsweise mit Aramidfasern, Kevlarfasern, Naturfasern oder einer beliebigen Kombination hiervon gebildet sein.

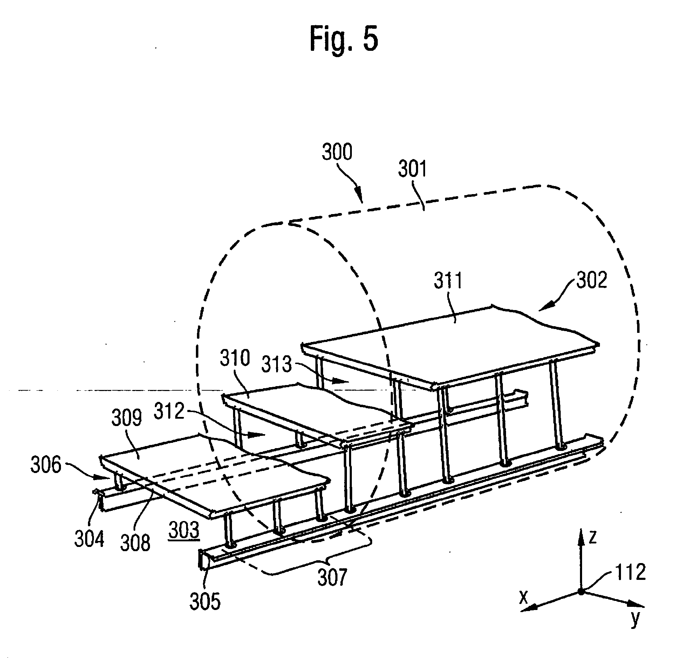

Die **Fig. 5** zeigt eine zweite Ausführungsvariante der erfindungsgemäßen Unterkonstruktion mit einer bereichsweise unterschiedlichen, jedoch fixen Höhe.
In eine Rumpfzelle 300 mit einer Rumpfzellenhaut 301 ist ein Fußbodensystem 302 integriert. Das gesamte Fußbodensystem 302 ist auf zwei durchgehenden, in einem unteren Bereich 303 der Rumpfzelle 300 befestigten Längsträgern 304,305 abgestützt. Im Unterschied zu den Ausführungsvarianten nach Maßgabe der Fig. 3,4 sind auf jedem Längsträger 304,305 jeweils drei Stützelemente angeordnet, von denen lediglich zwei vordere Stützelemente 306,307 mit einer Bezugsziffer versehen sind. Alle Stützelemente 306,307 sind mit einer Vielzahl von Querträgern, von denen ebenfalls lediglich ein Querträger 308 mit einer Bezugsziffer versehen ist, verbunden. Parallel zur x-Achse des Koordinatensystems 112 können weiterhin nicht dargestellte Sitzschienenprofile vorgesehen sein, auf denen und/oder zwischen denen drei Bodenelemente 309 bis 311 befestigt sind.
Infolge der jeweils abgestuft unterschiedlichen Höhen der hintereinander auf den Längsträgern 304,305 befestigten Stützelemente des Fußbodensystems 302 bilden die drei Bodenelemente 309 bis 311 im Gegensatz zu den vorherigen Ausführungsvarianten eine gestufte, nicht ebene Fußbodenfläche mit zwei Absätzen 312,313 bzw. Stufen. Da das Fußbodensystem 302 von der Primärstruktur der Rumpfzelle 300 mechanisch weitgehend entkoppelt bzw. losgelöst ist, kann eine betreffende Höhe der Stützelemente und damit eine Höhe der aufliegenden Bodenelemente 309 bis 311 in Relation zur z-Achse in weiten Grenzen beliebig und insbesondere unabhängig von etwaigen statischen Einschränkungen der Rumpfzelle 300 gewählt werden. Hierdurch ergeben sich im Vergleich zu vorbekannten Ausführungsformen von Fußbodensystemen vollkommen neuartige Gestaltungsmöglichkeiten innerhalb von Flugzeugrumpfzellen.

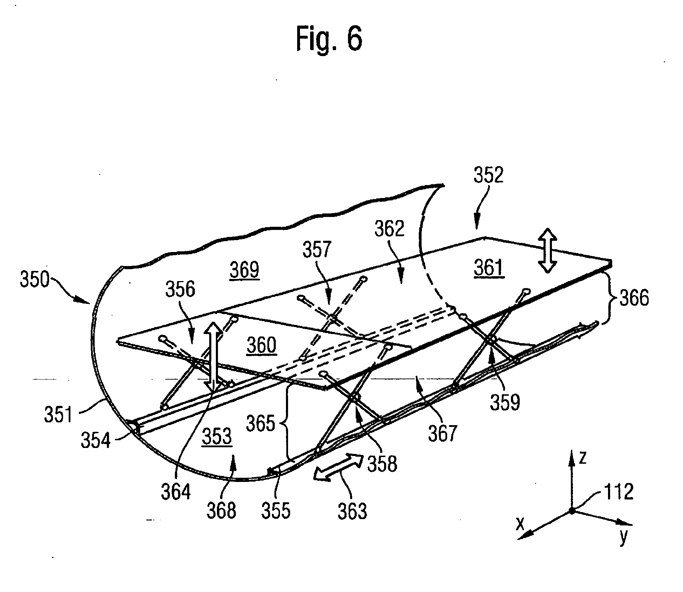

Die **Fig. 6** illustriert stark schematisiert ein stufenlos höhenverstellbares Fußbodensystem.
In einer Rumpfzelle 350 mit einer Rumpfzellenhaut 351 ist ein Fußbodensystem 352 angeordnet. In einem unteren Bereich 353 der Rumpfzelle 350 sind unter anderem zwei Längsträger 354,355 befestigt. Auf dem Längsträger 354 sind zwei Stützelemente 356,357 und auf dem Längsträger 355 sind zwei Stützelemente 358,359 angeordnet. Auf den Stützelementen 356 bis 359 liegen Bodenelemente 360,361 zur Schaffung einer Fußbodenfläche 362 auf. Die Stützelemente 356 bis 359 sind in dieser Ausführungsvariante des Fußbodensystems 352 jeweils als (Hub-)Scheren mit jeweils zwei gekreuzten Streben ausgebildet, die eine stufenlose Höhenverstellung erlauben.
Durch das Verschieben jeweils mindestens einer (nicht mit einer Bezugsziffer versehenen) Strebe in einer Schere eines Stützelementes 356 bis 359 entlang der x-Achse des Koordinatensystems 112 in Richtung des Pfeils 363 lässt sich die Höhe der Stützelemente 356 bis 359 in vertikaler Richtung, das heißt parallel zur z-Achse in Richtung des Pfeils 364 in weiten Bereichen vorzugsweise stufenlos einstellen. Jedes Stützelement 356 bis 359 verfügt über jeweils zwei, sich überkreuzende Streben. Mindestens zwei Streben eines jeden Stützelements 356 bis 359 sind in den Längsträgern 354,355 bzw. unterhalb der Bodenelemente 360,361 in Richtung der x-Achse verschiebbar aufgenommen.
Durch das gleichzeitige Verstellen der beiden vorderen Stützelemente 356,358 mit gleichen Verstellwegen, kann zum Beispiel das vordere Bodenelement 360 auf eine in weiten Grenzen veränderbare Höhe 365 gebracht werden, während durch das gleichzeitige Verstellen der beiden hinteren Stützelemente 357,359 eine Höhe 366 des hinteren Bodenelements 361 variierbar ist. Die beiden Bodenelemente 360,361 der Fußbodenfläche 362 stellen in Verbindung mit den vier Stützelementen 356 bis 359 im Ergebnis jeweils einen stufenlos höhenverstellbaren "Scherenhubtisch" dar. Um ein unerwünschtes Verkippen der Bodenelemente um die x-Achse zu verhindern (Schräglage der Fußbodenfläche 362 in Bezug zur xy-Ebene) werden die jeweils gegenüberliegenden Stützelemente 356,358 und 357,359 parallel zur z-Achse synchron verfahren.
Im gezeigten Ausführungsbeispiel der Fig. 6 sind die Höhen 365,366 gleich eingestellt, so dass sich eine durchgehende, ebene Fußbodenfläche 362 ergibt. Unterschiedliche Höhen 365,366 können beispielsweise dann eingestellt werden, wenn unterhalb des vorderen Bodenelements 360 beispielsweise ein im Vergleich zu einem hinteren Frachtraum 367 vergrößerter vorderer Frachtraum 368 geschaffen werden soll. Oberhalb der Fußbodenfläche 362 befindet sich der Passagierraum innerhalb der Rumpfzelle 350. Eine Höhenverstellung der Bodenelemente 360,361 während des Flugbetriebs ist bei dieser Ausführungsvariante nicht vorgesehen, grundsätzlich aber möglich.

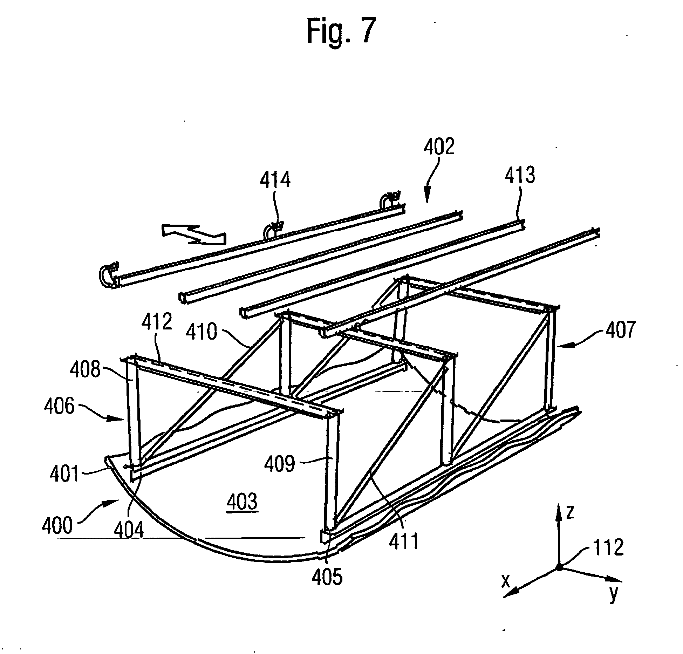

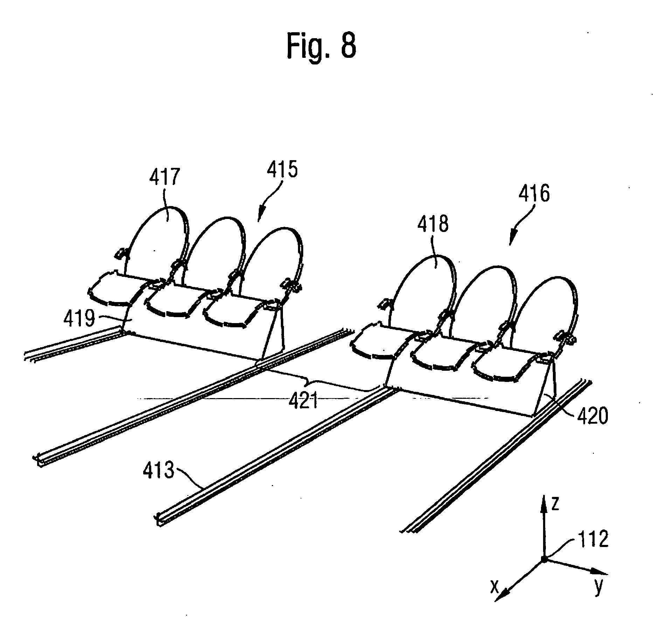

Im weiteren Verlauf der Beschreibung wird zugleich auf die **Fig. 7** und **Fig. 8** Bezug genommen.
Die Fig. 7 illustriert eine weitere Ausgestaltungsform des Fußbodensystems, während die Fig. 8 zwei Sitzgruppen als mit dem Fußbodensystem kombinierbare Funktionselemente zeigt.
Eine Rumpfzelle 400 mit einer Rumpfzellenhaut 401 ist mit einer weiteren Ausführungsvariante eines Fußbodensystems 402 ausgestattet. In einem unteren Bereich 403 der Rumpfzelle 400 verlaufen zwei Längsträger 404,405 parallel zur x-Achse des Koordinatensystems 112. Die Stützelemente 406,407 sind mit einer Vielzahl von parallel zur z-Achse verlaufenden Vertikalstreben und jeweils zwischen zwei Vertikalstreben angeordneten Diagonalstreben gebildet. Von den Vertikalstreben und den Diagonalstreben sind lediglich zwei vordere Vertikalstreben 408,409 sowie die zugehörigen Diagonalstreben 410,411 mit einer Bezugsziffer versehen. Auf den Vertikalstreben 408,409 sowie den weiteren nicht bezeichneten Vertikalstreben sind jeweils Querträger, von denen lediglich ein vorderer Querträger 412 mit einer Bezugsziffer versehen ist, befestigt, wobei die Querträger jeweils parallel zur y -Achse verlaufen. Auf den Querträgern sind im gezeigten Ausführungsbeispiel vier Sitzschienenprofile als Längsprofile angeordnet, von denen ein Sitzschienenprofil 413 stellvertretend für alle Übrigen eine Bezugsziffer aufweist. Die Sitzschienenprofile sind mit einer Vielzahl von Befestigungsmitteln, von denen ein klammerartiges Befestigungsmittel 414 mit einer Bezugsziffer versehen ist, auf den Querträgern befestigt.
Die Sitzschienenprofile sind jedoch vor der Befestigung parallel zur x-Achse (bzw. in Richtung der y-Achse) auf den Querträgern 412, wie durch den weißen Doppelpfeil angedeutet, frei positionierbar. Durch das derartige Verschieben von zwei Sitzschienenprofilen parallel zur y-Achse um jeweils denselben Betrag, lässt sich beispielsweise eine Gangbreite zwischen zwei, auf jeweils zwei Sitzschienenprofilen arretierten Sitzgruppen (Zweier- bzw. Dreiersitzgruppe für Passagiere (vgl. Fig. 8); nicht dargestellt) variieren. Bei den Befestigungsmitteln 414 kann es sich um beliebige Niet-, Schraub-, Klemm-, Steckverbindungen bzw. -elemente oder eine beliebigen Kombination hiervon handeln. Zur ortsvariablen und gegebenenfalls gerasterten Befestigung der Sitzschienenprofile auf den Querträgern können weiterhin Nuten, Rezesse, Ausnehmungen, Klammern, Klampen, Klauen oder eine beliebige Kombination hiervon dienen.

Die **Fig. 8** illustriert zwei fakultative Funktionselemente, die als Teil des Fußbodensystems im Bereich eines Innenraums eines Flugzeugs verwendet werden können. Alternativ können die Funktionselemente als Küchenmodule, Sanitärmodule, Aufbewahrungsmodule, Bodenelemente oder einer beliebigen Kombination hiervon ausgebildet sein.
Im gezeigten Ausführungsbeispiel der Fig. 8 sind die beiden Funktionselemente 415,416 als Sitzgruppen 417,418 ausgebildet, wobei in jeder Sitzgruppe 417,418 - im Unterschied zu Passagiersitzen nach Maßgabe des Standes der Technik (vgl. Fig. 2) - jeweils drei Sitze für Passagiere zusammengefasst sind. Jede Sitzgruppe 417,418 verfügt über einen Adapter 419,420 bzw. ein Anschlusselement, der in. Fig. 8 exemplarisch als ein kompaktes Prisma ausgebildet ist, grundsätzlich aber auch eine quaderförmige oder jede andere geometrische Gestalt aufweisen kann. Untere Anschlussbereiche der Adapter 419,420 werden mittels geeigneter Befestigungsmittel mit den Sitzschienen verbunden, während die Sitze selbst in einem oberen Anschlussbereich des Adapters an die Sitze mechanisch angekoppelt werden. Die Adapter 419,420 sind neben den Funktionselementen 415,416 integrale Bestandteile des Fußbodensystems 402 und erlauben als solche eine einfache und zeitsparende montagetechnische Anbindung der in der Regel von externen Zulieferern gefertigten Sitze an das im konkreten Einzelfall zum Einsatz kommende airbusspezifische Fußbodensystem. Alternativ können die Funktionselemente 415,416 auch als Bestandteil von Bodenelementen ausgestaltet sein.
Zwischen beiden (Dreier-)Sitzgruppen 417, 418 besteht eine angedeutete Gangbreite 421 bzw. ein Abstand (entlang der y-Achse zwischen beliebigen Funktionselementen ermittelt). Durch eine Verschiebung von mindestens zwei Sitzschienenprofilen 413 parallel zur x-Achse auf den in der Regel darunter liegenden Querträgern lässt sich die Gangbreite 421 erforderlichenfalls variieren.

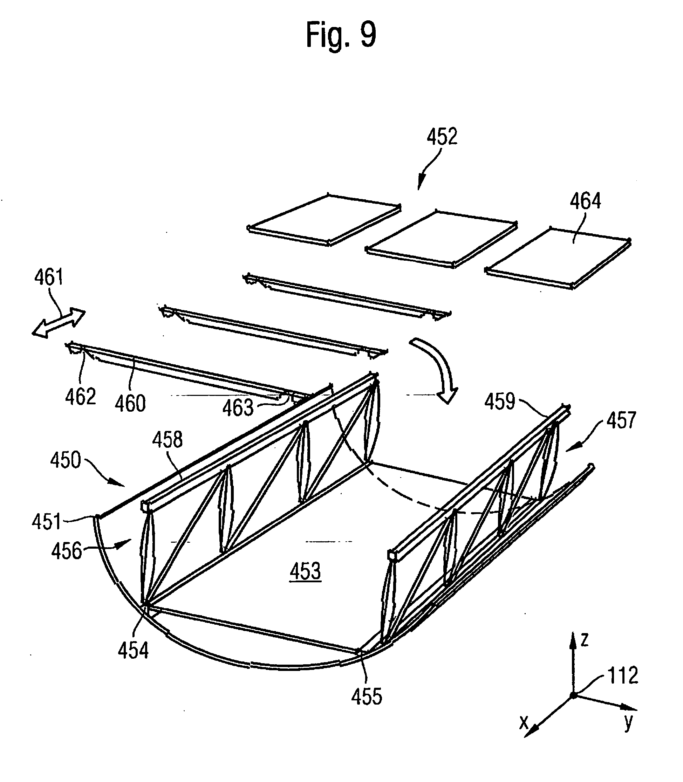

Die **Fig. 9** zeigt eine weitere alternative Ausführungsform des erfindungsgemäßen Fußbodensystems.
In eine Rumpfzelle 450 mit einer Rumpfzellenhaut 451 ist das Fußbodensystem 452 integriert. In einem unteren Bereich 453 verlaufen zwei Längsträger 454,455 jeweils parallel zueinander beabstandet und jeweils parallel zur x-Achse des Koordinatensystems 112. Auf den Längsträgern 454,455 ist jeweils ein fachwerkartiges Stützelement 456,457 angeordnet, das mit einer Vielzahl von als Samerstangen ausgebildeten Vertikalstreben sowie zwischen jeweils zwei benachbarten Vertikalstreben angebrachten Diagonalstreben gebildet ist. Beide Stützelemente 456,457 weisen oberseitig jeweils einen durchgehenden oberen Längsträger 458,459 auf, die vorzugsweise dieselbe Längserstreckung wie die (unteren) Längsträger 454,455 aufweisen.
Das Fußbodensystem 452 verfügt weiterhin über eine Vielzahl von Querträgern, von denen lediglich ein Querträger 460 mit einer Bezugsziffer versehen ist und die auf den oberen Längsträgern 458,459 an einer in Richtung der x-Achse beliebigen Position, wie durch einen Pfeil 461 symbolisiert, mittels nicht dargestellter Befestigungsmittel befestigbar sind. Die Querträger weisen an beiden jeweils eine Ausnehmung auf, um ein unkontrolliertes Verschieben auf den oberen Längsträgern 458,459 in Richtung der x-Achse und der y-Achse zu unterbinden. Die beidseitigen Ausnehmungen 462,463 am vorderen Querträger 460 sind repräsentativ für die Übrigen mit einer Bezugsziffer versehen. Der gekrümmte Pfeil symbolisiert eine bevorzugte Aufsetzrichtung der Querträger auf die oberen Längsträger 458,459 der Stützelemente 456,457 des Fußbodensystems 452. Zwischen und/oder auf den Querträgern 460 werden jeweils Fußbodenelemente 464, von denen lediglich eines repräsentativ für die verbleibenden zwei mit einer Bezugsziffer versehen ist, zur Schaffung einer ebenen Fußbodenfläche angeordnet und befestigt.

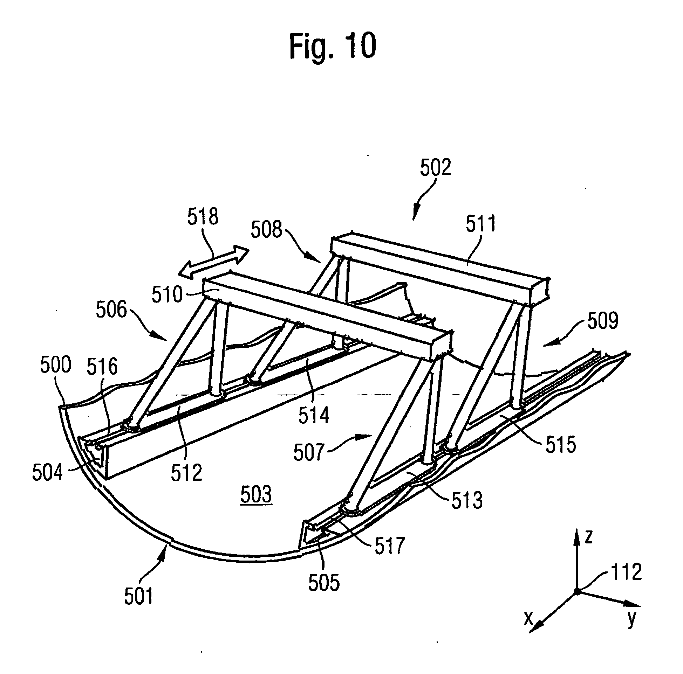

Die **Fig. 10** zeigt eine weitere Ausgestaltungsvariante des erfindungsgemäßen Fußbodensystems.
Eine Rumpfzelle 500 mit einer Rumpfzellenhaut 501 ist mit einem Fußbodensystem 502 versehen. Ein unterer Bereich 503 der Rumpfzelle 500 ist wiederum mit beidseitig parallel zur x-Achse des Koordinatensystems 112 verlaufenden Längsträgern 504,505 versehen, auf denen vier Stützelemente 506,507 sowie 508,509 angeordnet sind. Auf den Stützelementen 506,507 ist ein Querträger 510 befestigt und auf den Stützelementen 508,509 liegt ein Querträger 511 auf. Auf bzw. zwischen den Querträgern 510,511 werden in der Fig. 10 nicht dargestellte Fußbodenelemente zur Bildung der Fußbodenfläche in einem Passagierraum eines Flugzeugs angeordnet. Jedes der vier Stützelemente 506 bis 509 verfügt über eine Vertikalstrebe und eine Diagonalstrebe, die wegen der besseren zeichnerischen Übersicht nicht mit Bezugsziffern versehen sind. Jeweils ein oberes Ende einer Diagonalstrebe und ein oberes Ende einer Vertikalstrebe sind an einem Ende eines Querträgers zusammengeführt, während die korrespondierenden unteren Enden der Streben an vier Laschen 512 bis 515 befestigt sind. Die Laschen 512 und 514 an den (linksseitigen) Stützelementen 506,508 sind in einer schienenartigen Führung 516 (z. B. eine Nut mit einer umgekehrt T-förmigen Querschnittsgeometrie) innerhalb des Längsträgers 504 in Richtung der x-Achse verschiebbar und arretierbar aufgenommen. Dasselbe gilt für die Laschen 513,515, die in einer Führung 517 gleiten.
Infolge dieser Ausgestaltung wird es möglich, die Querträger 510,511 entlang der x-Achse (Flugzeuglängsachse) an beliebige Stellen in Richtung eines Pfeils 518 zu verschieben und dort festzusetzen. Hierdurch kann eine größere Anzahl von Querträgern 510,511 beispielsweise in denjenigen Bereichen der Fußbodenfläche positioniert werden, in denen höhere Lasten durch Funktionselemente, insbesondere parallel zur z-Achse, auftreten.

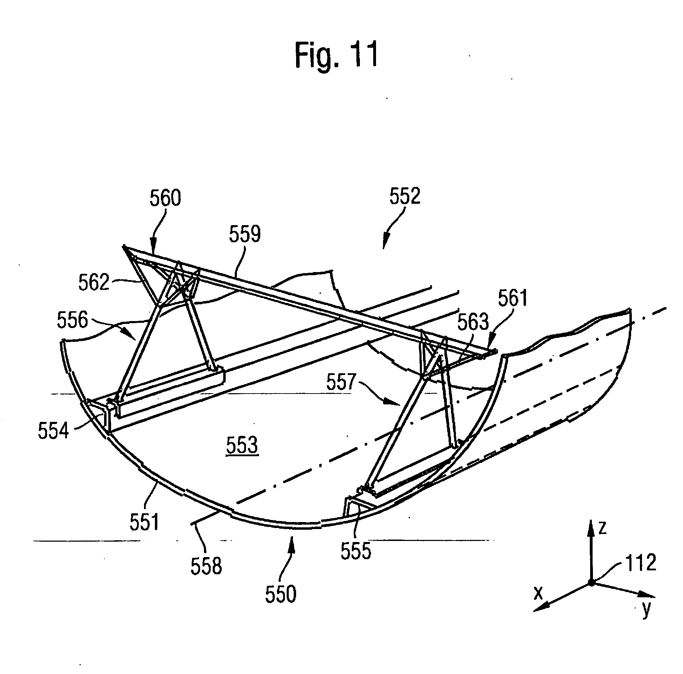

Die **Fig. 11** veranschaulicht eine weitere Ausführungsvariante des universellen Fußbodensystems.
In eine Rumpfzelle 550 mit einer Rumpfzellenhaut 551 ist ein Fußbodensystem 552 integiert. Das Fußbodensystem 552 umfasst unter anderem in einem unteren Bereich 553 der Rumpfzelle 550 integrierte Längsträger 554,555. Beide Längsträger 554,555 verlaufen parallel und mit jeweils gleichem Abstand zu einer Basislinie 558. Auf den Längsträgern 554,555 ist jeweils ein Stützelement 556 und 557 angeordnet, die durch einen Querträger 559 verbunden sind. Der Querträger 559 verläuft im Wesentlichen parallel zur y-Achse des Koordinatensystems 112. Im Unterschied zu den vorherigen Ausführungsvarianten ist der Querträger 559 in Bezug auf die Stützelemente 556,557 überkragend ausgebildet, das heißt der Querträger 559 weist im Bereich der beiden nicht bezeichneten Auflagepunkte auf den Stützelementen 556,557 jeweils nach außen weisende Überstände 560,561 (s.g. Kragenden) auf. Die beiden Überstände 560,561 sind mit in etwa dreieckförmigen Verstrebungen 562,563 mit nicht näher bezeichneten oberen Enden der Stützelemente 556,557 verstrebt. Durch die Wirkung der dreieckförmigen Verstrebungen 562,563 werden beide Stützelemente 556,557 in Verbindung mit dem aufliegenden Querträger 559 gegenüber parallel zur y-Achse einwirkenden Lasten stabilisiert, so dass die gesamte Unterkonstruktion bestehend aus den zwei Stützelementen 556,557, dem Querträger 559 sowie den beiden Verstrebungen 562,563 vollkommen losgelöst und unabhängig von der Primärstruktur der Rumpfzelle 550 auf den beiden Längsträgern 554,555 befestigt werden kann. Hierdurch ergeben sich völlig neue und sehr flexible Gestaltungsmöglichkeiten im Hinblick auf das neuartige Fußbodensystem 552, da auf etwaige statische Randbedingungen der Rumpfzelle 550 bei Modifikationen des Fußbodensystems 552 keinerlei Rücksicht mehr genommen zu werden braucht. Von Vorteil bei dieser Ausgestaltung ist darüber hinaus, dass keine Seitenanbindung der Stützelemente 556,557 an die Rumpfzelle 550 bzw. die nicht dargestellten Ringspanten vonnöten ist.
In der Rumpfzelle 550 wird zur Schaffung des Fußbodensystems 552 eine Vielzahl von entsprechend ausgebildeten Stützelementen 556,557 mit jeweils darauf aufliegenden und befestigten Querträgern 559 zur Schaffung einer Auflagefläche für nicht dargestellte Bodenelemente auf den Längsträgern 554,555 jeweils in Bezug zur x-Achse hintereinander versetzt angeordnet und befestigt. Die auf den Querträgern 559 aufliegenden und befestigten Bodenelemente bilden hierbei im einfachsten Fall eine durchgehende, für Passagiere begehbare Fußbodenfläche.

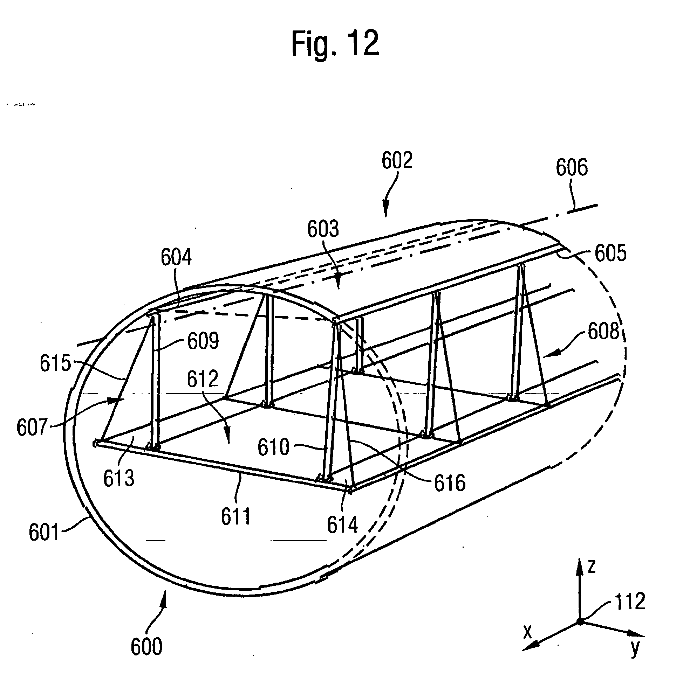

Die **Fig. 12** veranschaulicht eine "inverse" Ausgestaltungsvariante des Fußbodensystems.
In eine Rumpfzelle 600 mit einer Rumpfzellenhaut 601 ist wiederum ein Fußbodensystem 602 integriert. Im Gegensatz zu sämtlichen vorstehend beschriebenen Ausführungsvarianten des Fußbodensystems sind in einem oberen Bereich 603 zwei Längsträger 604,605 parallel verlaufend zur x-Achse des Koordinatensystems 112 befestigt. Die beiden Längsträger 604,605 verlaufen jeweils gleichmäßig beabstandet zu einer Scheitellinie 606 im oberen Bereich 603 der Rumpfzelle 600. Die Scheitellinie 606 verläuft durch den höchsten Punkt (Scheitelpunkt) der Querschnittsgeometrie der Rumpfzelle 600. An beiden Längsträgern 604,605 sind im gezeigten Ausführungsbeispiel der Fig. 12 wiederum zwei Stützelemente 607,608 befestigt (abgehängt), die exemplarisch mit insgesamt sechs Vertikalstreben gebildet sind, von denen lediglich die beiden vorderen Vertikalstreben 609,610 mit einer Bezugsziffer versehen sind. An den Vertikalstreben 609,610 sind mehrere Bodenelemente zur Schaffung einer durchgehenden und begehbaren Fußbodenfläche 612 befestigt, von denen nur das vorderste Bodenelement 611 mit einer Bezugsziffer versehen ist. Die Bodenelemente 611 können - eine entsprechende statische Eigensteifigkeit und Belastbarkeit vorausgesetzt - zugleich die Aufgabe der ansonsten vorhandenen Querträger übernehmen und direkt an die Vertikalstreben angebunden werden. Alternativ können jeweils zwei gegenüberliegende Vertikalstreben durch jeweils einen Querträger verbunden werden. Auf den Querträgern können dann gegebenenfalls noch parallel zur x-Achse verlaufende Längsprofile, beispielsweise Sitzschienenprofile oder dergleichen befestigt werden, zwischen denen oder auf denen dann die Bodenelemente zur Schaffung der Fußbodenfläche 612 angeordnet und befestigt werden. Vorzugsweise weisen die Bodenelemente 611 bzw. die Querträger jeweils beidseitig einen Überstand 613,614 auf. Zur weiteren Verstärkung des Fußbodensystems 602 gegenüber parallel zur y-Achse angreifenden Lasten erfolgt vorzugsweise zusätzlich eine Aussteifung mittels Diagonalstreben, die ausgehend von den jeweiligen Überständen 613,614 zu den jeweiligen nicht bezeichneten Anbindungspunkten der Vertikalstreben 609,610 im Bereich der Längsträger 604,605 verlaufen. Repräsentativ für alle übrigen Diagonalstreben sind die vorderen Diagonalstreben 615 sowie 616 mit einer Bezugsziffer versehen. Die Diagonalstreben 615,616 können mit auf Druck und Zug belastbaren Profilen und/oder gegebenenfalls ausschließlich mit Zugkräften belastbaren Komponenten, wie beispielsweise Seilen oder Bändern gebildet sein. Für die Materialwahl hinsichtlich der Diagonalstreben wird auf die bereits vorstehend gemachten Ausführungen verwiesen.
Die Ausgestaltungsvariante nach Maßgabe der Fig. 12 weist insbesondere den Vorteil auf, dass die Stützelemente 607,608 bzw. die diese jeweils bildenden Vertikalstreben 609,610 im Wesentlichen nur auf Zug parallel zur z-Achse belastet werden, wodurch sich Gewichtseinsparpotenziale im Vergleich zu anderen konstruktiven Lösungen ergeben, die gleichermaßen auf Zug und Druck belastbare Baugruppen voraussetzen. Infolge der Diagonalstreben 615,616 ist darüber hinaus eine zusätzliche Seitenanbindung der Stützelemente 607,608 an die Rumpfzelle 600 bzw. die in diese integrierten Ringspanten in der Regel entbehrlich. Somit ist es auch bei dieser von der Rumpfzelle 600 statisch entkoppelten Ausführungsvariante des Fußbodensystems 602 möglich, erforderliche Modifikationen am Fußbodensystem 602 weitgehend unabhängig von den statischen Einschränkungen der Rumpfzelle 600 mit geringem Aufwand vorzunehmen.

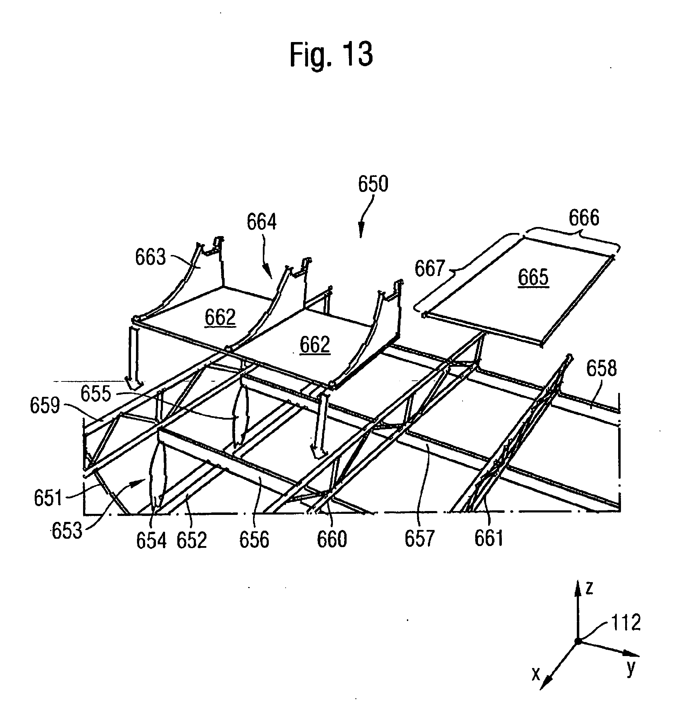

Die **Fig. 13** zeigt das Fußbodensystem mit zwei Bodenelementen. Ein Fußbodensystem 650 in einer Rumpfzelle 651 umfasst unter anderem zwei Längsträger, von denen in der Darstellung der Fig. 13 lediglich ein Längsträger 652 sichtbar ist. Auf dem Längsträger 652 ist ein Stützelement 653 angeordnet, das sich parallel zur x-Achse im Wesentlichen über die Gesamtlänge des Flugzeugs hinweg erstreckt. Dasselbe gilt für den nicht, dargestellten Längsträger. Das Stützelement 653 umfasst im gezeigten Ausführungsbeispiel Vertikalstreben 654,655, die auch als (höhenverstellbare) Samerstangen ausgeführt sein können. Auf dem Stützelement 653 und dem weiteren nicht dargestellten Stützelement liegt parallel zur y-Achse eine Vielzahl von Querträgern 656 bis 658 auf. Auf den Querträgern 656 bis 658 liegen drei Längsprofile 659 bis 661 auf, die im gezeigten Ausführungsbeispiel jeweils fachwerkartig verstrebt sind. Die Längsprofile 659 bis 661 können beispielsweise mit Längsprofilen mit einer Doppel-T-förmigen Querschnittsgeometrie (so genannte Doppel-T-Träger) gebildet sein, wobei in einen die beiden Flansche des Doppel-T-Trägers verbindenden senkrechten Steg dreieckförmige und/oder rechteckförmige Ausnehmungen zur Schaffung der fachwerkartigen Gesamtstruktur ausgefräst sind. Ein Bodenelement 662 weist einen Adapter 663 auf, der zur Befestigung einer nicht dargestellten Dreier-Sitzgruppe für Passagiere dient (vgl. insb. Fig. 8). Sowohl der Adapter 663 als auch die nicht dargestellte Sitzgruppe bilden ein Funktionselement 664, das ein integraler Bestandteil des Bodenelements 662 ist. Der Adapter 663 ermöglicht eine problemlose Befestigung unterschiedlicher Baugruppen bzw. Komponenten, zum Beispiel von Sitzgruppen unterschiedlicher Zulieferer, auf dem standardisierten Bodenelement 662. Ein weiteres Bodenelement weist kein Funktionselement auf, ist jedoch als ein Ausgleichsbodenelement 665 ausgestaltet, das insbesondere zur Auffüllung (Sitzabstände) und zum Ausgleich von Leerflächen zwischen Bodenelementen mit Funktionselementen dient. Zur Erfüllung dieses Zwecks sind eine Breite 666 sowie eine Länge 667 des Ausgleichsbodenelements 665 in einem standardisierten Raster ausgebildet. Beispielsweise können für die Breite 666 (entlang der y-Achse) und die Länge 667 (entlang der x-Achse) ganzzahlige Vielfache von 2,54 cm gewählt werden.
Das Bodenelement 662 und das Ausgleichsbodenelement 665 sind bevorzugt mit hochfesten Sandwichplatten aus faserverstärkten Kunststoffmaterialien gebildet. Eine hinreichende mechanische Festigkeit der Bodenelemente 662,665 vorausgesetzt, kann gegebenenfalls ganz oder teilweise auf die Längsprofile 659 bis 661 und/oder die Querträger 656 bis 658 innerhalb des Fußbodensystems 650 verzichtet werden. Die Bodenelemente 662,665 werden mittels nicht dargestellter Befestigungselemente auf den Längsprofilen 659 bis 661 befestigt.

Eine nicht bezeichnete Fläche des Bodenelements 662 bzw. des Ausgleichsbodenelements 665, insbesondere jedoch die Flächen der Bodenelemente mit darauf angeordneten Funktionselementen, sind so gewählt, dass jedes Bodenelement 662,665 bevorzugt mindestens ein nicht bezeichnetes Rasterfeld, das durch mindestens zwei Querträger 656,658 und mindestens zwei Längsprofile 659,660 definiert ist, abdeckt. Hierdurch werden von den Funktionselementen der betreffenden Bodenelemente, zum Beispiel in Gestalt einer Anordnung von drei Passagiersitzen, ausgehende Kräfte über eine große Fläche in das Fußbodensystem 650 eingeleitet, so dass die Einzelkomponenten, insbesondere die Querträger 656 bis 658 und die Längsprofile 659 bis 661, im Vergleich zu konventionellen Ausführungsformen von Fußbodengerüsten statisch leichter und damit gewichtssparender dimensioniert werden können. Darüber hinaus erlauben die Bodenelemente mit integrierten Funktionselementen eine schnellere und leichtere Montage, da die verschiedenen Funktionselemente bereits auf den Bodenelementen befestigt sind und die Fertigstellung des betreffenden Fußbodenabschnitts einschließlich zum Beispiel einer Sitzgruppe durch das Absenken und Befestigen des Bodenelements 662 auf den Längsprofilen 659,660 in Richtung der beiden weißen Pfeile erfolgt.

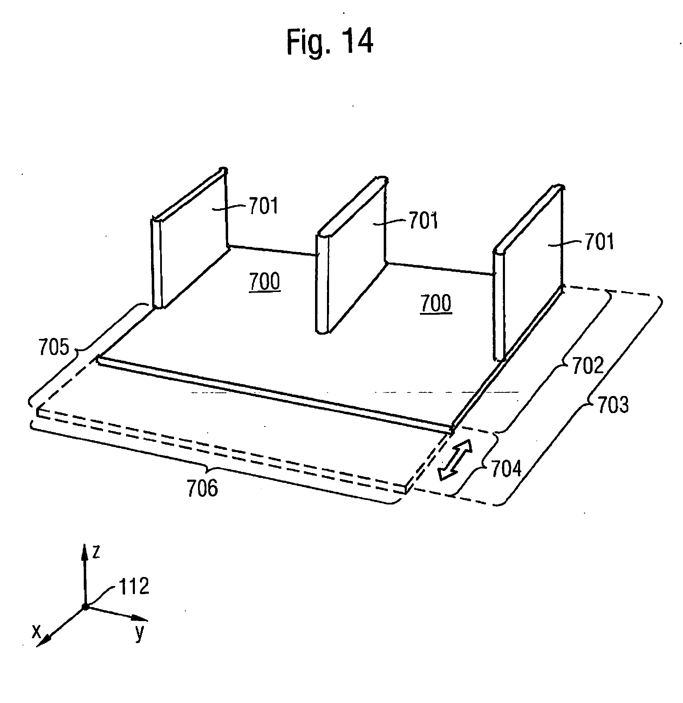

Die **Fig. 14** zeigt ein Bodenelement 700 mit einem darauf befindlichen Adapter 701 zur Befestigung von weiteren Funktionselementen, zum Beispiel Sitzgruppen (nicht dargestellt) mit jeweils zwei oder drei Sitzen für Passagiere.
Um einen flexiblen Längenausgleich zur Einstellung bestimmter Sitzabstände in Richtung der x-Achse des Koordinatensystems 112 zu bewirken, ist das Bodenelement 700 mit jeweils unterschiedlichen Längen verfügbar. In der Darstellung weist das Bodenelement zum Beispiel alternativ die fixe Länge 702 oder 703 auf. Eine Differenzlänge 704 (ΔL) zwischen den Längen 702,703 folgt bevorzugt einem gestuften Standardrastermaß, wie durch den weißen Doppelpfeil angedeutet, um eine Gesamtzahl der vorzuhaltenden Bodenelemente mit jeweils unterschiedlichen Abmessungen (Länge/Breite) zu begrenzen. Beispielsweise kann für die Differenzlänge 704 ein Wert gewählt werden, der einem ganzzahligen Vielfachen eines Querträgerabstands des Fußbodensystems entspricht, der in vielen Fällen auch identisch mit einem Spantabstand in der Rumpfzelle sein wird. Beträgt der Spantabstand in der Rumpfzelle beispielsweise 50 cm, so kann die Längendifferenz 704 zum Beispiel ein Vielfaches von 50 cm betragen, um zumindest eine vollständige randseitige Auflage der Bodenelemente auf einem von den Querträgern und/oder den Längsprofilen definierten Raster (nicht dargestellt) zu erzielen.
Durch die Variation der Längen 702,703 lässt sich ein Abstand 705 zu einem vorhergehenden oder nachfolgenden Bodenelement mit einer darauf als Funktionselement montierten (zum Beispiel einer Dreier- oder Zweier-Sitzgruppe) verändern. Werden zusätzlich noch die Querträgerabstände (parallel zur y-Achse; vgl. hierzu insb. die Fig. 9,10) und/oder die Längsprofilabstände (parallel zur x-Achse, vgl. insb. Fig. 7) unabhängig von einem vorhandenen Ringspantabstandsmaß der Rumpfzelle variiert, kann die Abstufung der Längendifferenz 704 und zugleich eine Variation einer Breite 706 des Bodenelements 700 in nahezu beliebig kleinen Schritten, wie zum Beispiel in 10 cm Schritten erfolgen, um ein Höchstmaß an Flexibilität zu erreichen.
Durch das hintereinander Anordnen einer Vielzahl von Bodenelementen mit jeweils derart abgestuft unterschiedlichen fixen Längen 702,703 und/oder einer unterschiedlichen Breite 706 auf den Stützelementen bzw. den Querträgern und/oder den Längsprofilen des Fußbodensystems, lässt sich eine Bestuhlung in einem Passagierflugzeug zumindest in Richtung der x-Achse auf einfache Weise schnell und flexibel an eine Vielzahl von kundenspezifischen Sonderwünschen (z.B. Sitzabstände in Flugrichtung) anpassen.
Durch die Variation der Breite 706 des Fußbodenelements 700 in gleichfalls bevorzugt standardisierten Abstufungen kann zudem insbesondere eine Gangbreite in Richtung der y-Achse (vgl. insb. Fig. 7) zwischen Sitzgruppenreihen innerhalb der Bestuhlung flexibel angepasst werden.

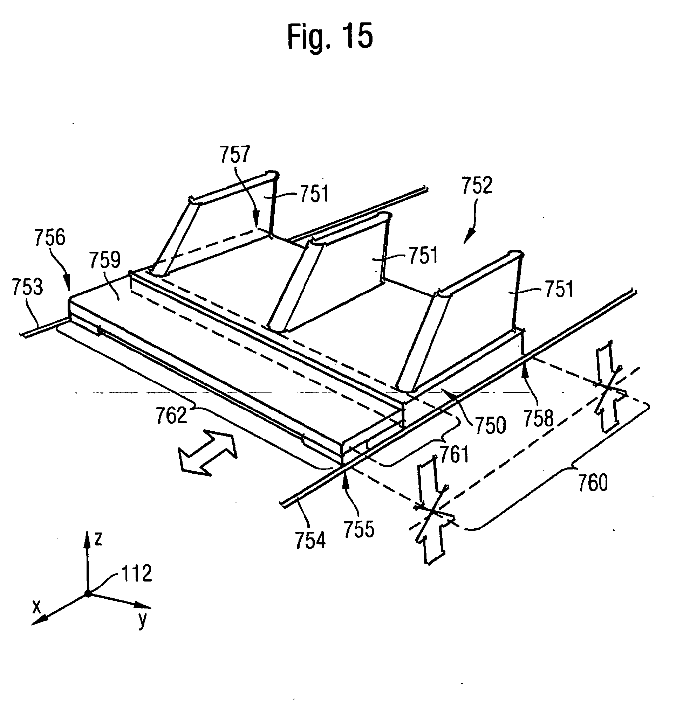

Die **Fig. 15** zeigt schematisch eine weitere alternative Ausführungsvariante eines Bodenelementes zur Verwendung mit dem Fußbodensystem.
Ein Bodenelement 750 ist mit einem Adapter 751 in der Form von drei nicht bezeichneten Podesten als ein erstes Funktionselement 752 ausgestattet, das als universelles Interface zu einer nicht dargestellten Dreier-Sitzgruppe für Passagiere dient. Das Bodenelement 750 wird mittels geeigneter, nicht dargestellter Befestigungselemente, wie durch die vier gegenläufigen Pfeile prinzipiell angedeutet, auf den beiden Längsprofilen 753,754 in vier Befestigungspunkten 755 bis 758 festgesetzt. Das Bodenelement 750 verfügt ferner über einen entlang der x-Achse des Koordinatensystems 112 (parallel zur y-Achse) schubladenartig ein- und ausfahrbaren Ausgleichsabschnitt 759, wodurch eine Länge 760 des Bodenelements 750 in weiten Grenzen variierbar ist.
Durch den vorzugsweise stufenlos oder stufig ein- und ausfahrbaren und arretierbaren Ausgleichsabschnitt 759 kann eine Länge 760 des Bodenelements 750 in einem weiten Bereich angepasst werden. Hierdurch wird es beispielsweise erstmals möglich, einen schematisch angedeuteten (Sitz-)Abstand 761 des Fußbodensystems flexibel an unterschiedliche Kundenwünsche anzupassen.
Das Bodenelement 750 nach Maßgabe der Fig. 15 übernimmt zugleich die Funktion eines Bodenelements mit integriertem Funktionselement 752 und der eines universellen Ausgleichsbodenelements für einen universellen Längenausgleich entlang der x-Achse des Koordinatensystems 112.
Dadurch, dass das Bodenelement 750 eine große Auflagefläche auf den Längsprofilen 753,754 aufweist - die durch die aktuell eingestellte Länge 760 und eine im allgemeinen fixe Breite 762 definiert ist - werden die vom Adapter 751 bzw. vom darauf angeordneten Funktionselement 752 ausgehenden Kräfte über eine große Fläche verteilt in das Fußbedensystemen eingeleitet, so dass dessen Einzelkomponenten, insbesondere die Längsprofile und/oder die Querträger, statisch leichter ausgelegt werden können. Alternativ kann auch die Breite 762 des Bodenelements 750 mit einem zum Ausgleichsabschnitt 759 konstruktiv entsprechend ausgestalteten Ausgleichsmechanismus ausgestattet sein, um die Breite 762 entlang der y-Achse verändern zu können.

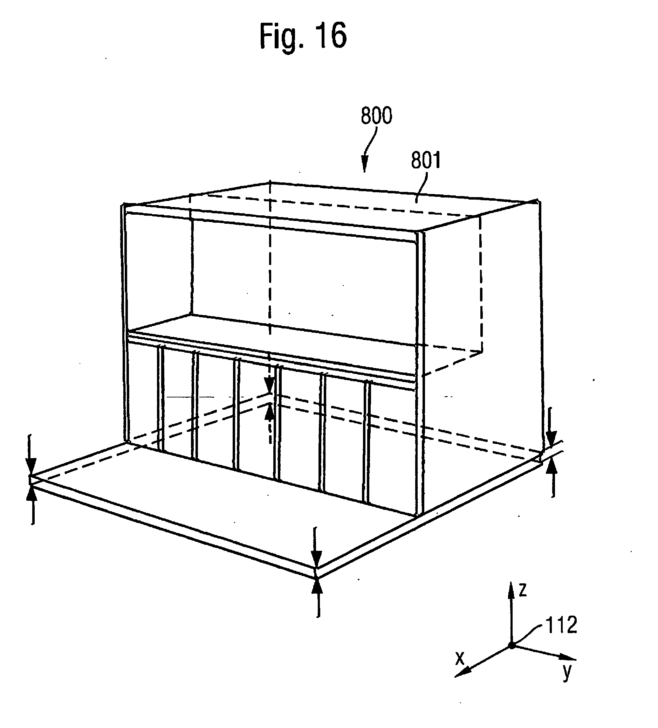

Die **Fig. 16** zeigt eine weitere Ausführungsvariante eines Bodenelements mit einem integrierten Funktionselement.
Ein Bodenelement 800 ist exemplarisch mit einem vollständigen Küchenmodul 801 (so genannte "Galley") als ein optionales Funktionselement ausgestattet. Die Befestigung des Bodenelements 800 auf den Längsprofilen bzw. den Querträgern des Fußbodensystems erfolgt bevorzugt in den mit entgegen gerichteten Pfeilen gekennzeichneten Eckbereichen des Bodenelements 800. Anstelle des Küchenmoduls 801 kann das Bodenelement 800 alternativ mit beliebig anderen Funktionselementen, beispielsweise mit einem kompletten Sanitärmodul, einem Bevorratungsmodul, einem Schließfachmodul, einem Modul mit mindestens einem Schlaf- und/oder Aufenthaltsraum für Passagiere und/oder Personal sowie einem Einhausungsmodul für technische Vorrichtungen oder einer beliebigen Kombination hiervon, ausgestattet sein.

Bevorzugt sind sämtliche Anschlüsse für eine Anbindung des Funktionselements an die notwendigen Bordsysteme des Flugzeugs mit in das Bodenelement 800 in der Form einer universellen Schnittstelle integriert, so dass ein schneller und bevorzugt steckbarer und wieder lösbarer Anschluss des Funktionselements möglich ist.

Bei den Bordsystemen handelt es sich beispielsweise um elektrische Systeme, optische Systeme, hydraulische Systeme, pneumatische Systeme, Frischwassersysteme, Abwassersysteme oder Klimatisierungssysteme des Flugzeugs.

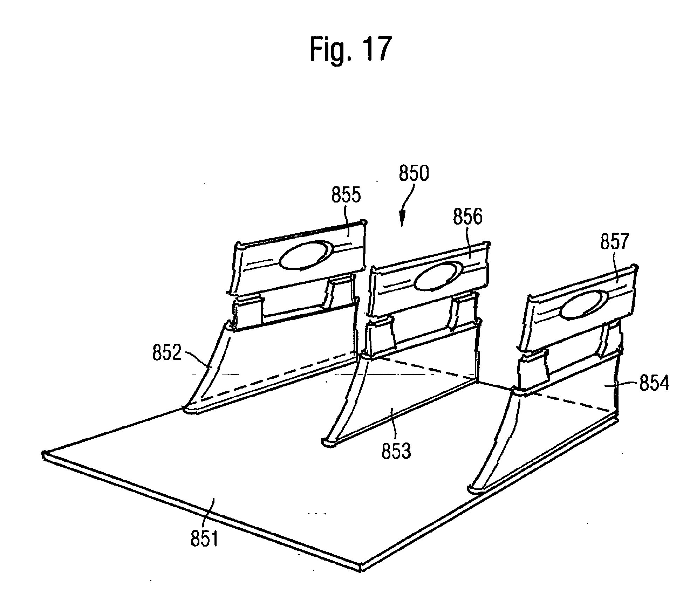

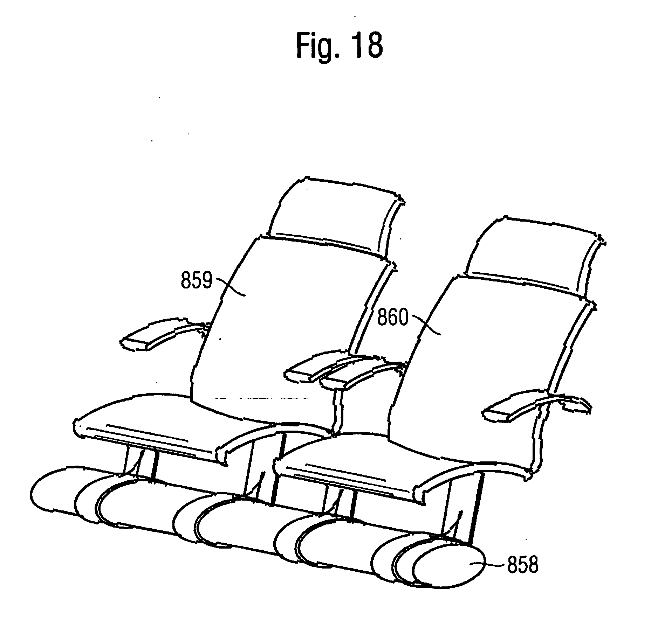

Die **Fig. 17** und **18**, auf die zugleich Bezug genommen wird, zeigen eine weitere Ausführungsvariante eines Bodenelements. Ein Bodenelement 850 umfasst eine ebene Fußbodenplatte 851, wobei eine Erhöhung (Podest) mit drei, nebeneinander sowie gleichmäßig beabstandet auf der Fußbodenplatte 851 angeordneten Stützen 852 bis 854 gebildet ist. Auf den Stützen 852 bis 854 können drei Adapter 855 bis 857 zum Beispiel mittels einer Steck- bzw. Zapfenverbindung, einer Schraubverbindung, einer Steckverbindung oder dergleichen befestigt werden. Die Adapter 855 bis 857 sind jeweils zweigeteilt mit jeweils einem nicht mit einer Bezugsziffer versehenen Unter- und einem Oberteil ausgebildet. In den Ober- und Unterteilen ist jeweils eine nicht bezeichnete Ausnehmung vorgesehen, die sich bei zusammen montierten Ober- und Unterteilen jeweils in etwa zu einer Querschnittsgeometrie ergänzen, die der eines Sitzträgers 858 (vgl. Fig. 18) entspricht, wobei sich zwischen dem Querträger und den Ober- und den Unterteilen der Adapter im montierten Zustand vorzugsweise ein leichter Pressschluss einstellt, um einen sicheren Sitz zu gewährleisten. Der Sitzträger 858 weist im gezeigten Ausführungsbeispiel eine elliptische Querschnittsgeometrie auf. Grundsätzlich kann der Sitzträger 858 jede andere geeignete Querschnittsgeometrie (z.B. rechteckig, quadratisch, dreieckig, oval oder dergleichen) aufweisen, die ein Verdrehen des Sitzträgers 858 um seine Längsachse in den Adaptern 855 bis 857 erschwert bzw. verhindert. Auf dem Sitzträger 858 sind im gezeigten Ausführungsbeispiel der Fig. 18 zwei (Einzel-)Sitze 859 und 860 mit Armlehnen und Kopfstützen montiert, die eine Sitzgruppe bilden. Das Bodenelement 850 umfasst im montierten Zustand die Fußbodenplatte 851, die drei Stützen 852 bis 854, die Adapter 855 bis 857, den Sitzträger 858 sowie die darauf befindliche Sitzgruppe mit den beiden Sitzen 859,860. Somit lässt sich das Bodenelement 850 auf einfache Weise in das erfindungsgemäße, modulare und flexible Fußbodensystem integrieren.

Mittels der drei Adapter 855 bis 857 können die auf den Sitzträgern 858 befestigten Sitze 859,860 von externen Zulieferern bezogen werden, während das hiervon systemunabhängige Bodenelement 850 vom Flugzeughersteller selbst standardisiert gefertigt wird. Somit können eine Vielzahl von unterschiedlichen Sitzträgern 858 mit Sitzen 859,860 auf immer demselben, standardisierten Bodenelement 850 angeordnet und befestigt werden, wodurch die Fertigungseffizienz beträchtlich steigt. Darüber hinaus erleichtern die Adapter 855 bis 857 eine Auswechselung der Passagiersitze bei Umgruppierungen und/oder bei Reinigungs- bzw. Wartungsarbeiten.

### Bezugszeichenliste

- 100: Rumpfzelle (Flugzeug)
- 101: Rumpfzellenhaut
- 102: Ringspant
- 103: Fußbodensystem (Stand der Technik)
- 104: Querträger
- 105: Samerstange
- 106: Samerstange
- 107: Sitzschienenprofil
- 108: Fußbodenplatte
- 109: Fußboden
- 110: Passagierraum (Passagierkabine)
- 111: Frachtraum
- 112: Koordinatensystem
- 150: Sitz (Passagiersitz)
- 151: Bein
- 152: Bein
- 153: Befestigungspunkt (Sitz)
- 154: Befestigungspunkt (Sitz)
- 155: Sitzschienenprofil
- 156: Abstand (parallel zur x-Achse)
- 200: Rumpfzelle
- 201: Rumpfzellenhaut
- 202: Fußbodensystem
- 203: unterer Bereich (Rumpfzelle)
- 204: Längsträger
- 205: Längsträger
- 206: Stützelement
- 207: Stützelement
- 208: Vertikalstrebe
- 209: Vertikalstrebe
- 210: Diagonalstrebe
- 211: Längsstrebe
- 212: Querträger
- 213: Seitenanbindung (Samerstange)
- 214: Samerstange
- 215: Samerstange
- 216: Querträger
- 250: Rumpfzelle
- 251: Rumpfzellenhaut
- 252: Fußbodensystem
- 253: unterer Bereich
- 254: Längsträger
- 255: Längsträger
- 256: Stützelement
- 257: Stützelement
- 258: Vertikalstrebe
- 259: Querträger
- 260: Sitzschienenprofil
- 261: Fußbodenfläche
- 262: Bodenelement
- 263: Seitenanbindung
- 264: Seitenanbindung
- 300: Rumpfzelle
- 301: Rumpfzellenhaut
- 302: Fußbodensystem
- 303: unterer Bereich
- 304: Längsträger
- 305: Längsträger
- 306: Stützelement
- 307: Stützelement
- 308: Querträger
- 309: Bodenelement
- 310: Bodenelement
- 311: Bodenelement
- 312: Absatz
- 313: Absatz
- 350: Rumpfzelle
- 351: Rumpfzellenhaut
- 352: Fußbodensystem
- 353: unterer Bereich
- 354: Längsträger
- 355: Längsträger
- 356: Stützelement
- 357: Stützelement
- 358: Stützelement
- 359: Stützelement
- 360: Bodenelement
- 361: Bodenelement
- 362: Fußbodenfläche
- 363: Pfeil
- 364: Pfeil
- 366: Höhe
- 367: hinterer Frachtraum
- 368: vorderer Frachtraum
- 369: Passagierraum
- 400: Rumpfzelle
- 401: Rumpfzellenhaut
- 402: Fußbodensystem
- 403: unterer Bereich
- 404: Längsträger
- 405: Längsträger
- 406: Stützelement
- 407: Stützelement
- 408: Vertikalstrebe
- 409: Vertikalstrebe
- 410: Diagonalstrebe
- 411: Diagonalstrebe
- 412: Querträger
- 413: Sitzschienenprofil
- 414: Befestigungsmittel
- 415: Funktionselement
- 416: Funktionselement
- 417: Sitzgruppe (Dreier-Sitzgruppe)
- 418: Sitzgruppe (Dreier-Sitzgruppe)
- 419: Adapter
- 420: Adapter
- 421: Gangbreite
- 450: Rumpfzelle
- 451: Rumpfzellenhaut
- 452: Fußbodensystem
- 453: unterer Bereich
- 454: Längsträger
- 455: Längsträger
- 456: Stützelement
- 457: Stützelement
- 458: oberer Längsträger
- 459: oberer Längsträger
- 460: Querträger
- 461: Pfeil
- 462: Ausnehmung
- 463: Ausnehmung
- 464: Bodenelement
- 500: Rumpfzelle
- 501: Rumpfzellenhaut
- 502: Fußbodensystem
- 503: unterer Bereich
- 504: Längsträger
- 505: Längsträger
- 506: Stützelement
- 507: Stützelement
- 508: Stützelement
- 509: Stützelement
- 510: Querträger
- 511: Querträger
- 512: Lasche
- 513: Lasche
- 514: Lasche
- 515: Lasche
- 516: Führung
- 517: Führung
- 518: Pfeil
- 550: Rumpfzelle
- 551: Rumpfzellenhaut
- 552: Fußbodensystem
- 553: unterer Bereich
- 554: Längsträger
- 555: Längsträger
- 556: Stützelement
- 557: Stützelement
- 558: Basislinie (Rumpfzelle)
- 559: Querträger
- 560: Überstand (Kragende)
- 561: Überstand (Kragende)
- 562: dreieckförmige Verstrebung
- 563: dreieckförmige Verstrebung
- 600: Rumpfzelle
- 601: Rumpfzellenhaut
- 602: Fußbodensystem
- 603: oberer Bereich
- 604: Längsträger
- 605: Längsträger
- 606: Scheitellinie
- 607: Stützelement
- 608: Stützelement
- 609: Vertikalstrebe
- 610: Vertikalstrebe
- 611: Bodenelement
- 612: Fußbodenfläche
- 613: Überstand (Bodenelement/Querträger)
- 614: Überstand (Bodenelement/Querträger)
- 615: Diagonalstrebe
- 616: Diagonalstrebe
- 650: Fußbodensystem
- 651: Rumpfzelle
- 652: Längsträger
- 653: Stützelement
- 654: Vertikalstrebe
- 655: Vertikalstrebe
- 656: Querträger
- 657: Querträger
- 658: Querträger
- 659: Längsprofil
- 660: Längsprofil
- 661: Längsprofil
- 662: Bodenelement
- 663: Adapter (zum Beispiel für Sitzgruppe)
- 664: Funktionselement
- 665: Ausgleichsbodenelement
- 666: Breite (Ausgleichsbodenelement)
- 667: Länge (Ausgleichebodenelement)
- 700: Bodenelement
- 701: Adapter (z.B. für ein Sitzgruppe)
- 702: Länge (erstes Bodenelement)
- 703: Länge (zweites Bodenelement)
- 704: Längendifferenz
- 705: Abstand (Sitzabstand)
- 706: Breite
- 750: Bodenelement
- 751: Adapter
- 752: Funktionselement
- 753: Längsprofil
- 754: Längsprofil
- 755: Befestigungspunkt
- 756: Befestigungspunkt
- 757: Befestigungspunkt
- 758: Befestigungspunkt
- 759: Ausgleichsabschnitt (teleskopierbar)
- 760: Länge (Bodenelement)
- 761: Abstand (Sitzabstand)
- 762: Breite (Bodenelement)
- 800: Bodenelement
- 801: Funktionselement (Küchenmodul)
- 850: Bodenelemente
- 851: Fußbodenplatte
- 852: Stütze
- 853: Stütze
- 854: Stütze
- 855: Adapter
- 856: Adapter
- 857: Adapter
- 858: Sitzträger
- 859: Sitz
- 860: Sitz

## Patentansprüche

1. Fußbodensystem (202; 252; 302; 352; 402; 452; 502; 552; 602; 650) für eine Rumpfzelle (200; 250; 300; 350; 400; 450; 500; 550; 600; 651) eines Flugzeugs mit einer Vielzahl von Bodenelementen (262; 309 - 311; 360, 361; 464; 611; 622, 665; 700; 750; 800; 850) zur Bildung einer Fußbodenfläche (261; 362; 612), mit mindestens zwei Längsträgern (204, 205; 254, 255; 304, 305; 354, 355; 404, 405; 454, 455; 504, 505; 554, 555; 604, 605; 652), welche in eingebautem Zustand in einem unteren Bereich (203; 253; 303; 353; 403; 453; 503; 553) oder in einem oberen Bereich (603) der Rumpfzelle (200; 250; 300; 350; 400; 450; 500; 550; 600; 651) befestigt sind und auf denen jeweils mindestens ein Stützelement (206, 207; 256, 257; 306, 307; 356 - 359; 406, 407; 456, 457; 506, 507, 508, 509; 556, 557; 607, 608; 653) angeordnet ist, wobei auf den mindestens zwei gegenüberliegenden Stützelementen (206, 207; 256, 257; 306, 307; 356 - 359; 406, 407; 456, 457; 506 - 509; 556, 557; 607, 608; 653) jeweils mindestens ein Querträger (212, 216; 259; 308; 412; 460; 510, 511; 559; 656 - 658) zur Auflage und Befestigung der Bodenelemente (262; 309 - 311; 360, 361; 464; 611; 622, 665; 700; 750; 800; 850) angeordnet ist, wodurch das Fußbodensystem (202; 252; 302; 352; 402; 452; 502; 552; 602; 650) im Wesentlichen selbsttragend ausgebildet ist und mechanisch weitgehend von der Rumpfzelle (200; 250; 300; 350; 400; 450; 500; 550; 600; 651) als Primärstruktur entkoppelt ist.

2. Fußbodensystem nach Patentanspruch 1, **dadurch gekennzeichnet, dass** das mindestens eine Stützelement (206, 207; 256, 257; 306, 307; 356 - 359; 406, 407; 456, 457; 506 - 509; 556, 557; 607, 608; 653) als fachwerkartige Verstrebung ausgebildet ist.

3. Fußbodensystem nach Patentanspruch 1 oder 2, **dadurch gekennzeichnet, dass** die Stützelemente (306, 307) unterschiedliche fixe Höhen in Relation zu einer z-Achse aufweisen.

4. Fußbodensystem nach Patentanspruch 1 oder 2, **dadurch gekennzeichnet, dass** die Stützelemente (356 - 359) parallel zur z-Achse höhenverstellbar sind.

5. Fußbodensystem nach einem der vorhergehenden Patentansprüche, **dadurch gekennzeichnet, dass** die Stützelemente (506 - 509) auf den Längsträgern (504, 505) parallel zu einer x-Achse verschiebbar und arretierbar sind.

6. Fußbodensystem nach einem der vorhergehenden Patentansprüche, **dadurch gekennzeichnet, dass** mindestens ein. Querträger (460) auf mindestens zwei Stützelementen (456, 457) parallel zur x-Achse verschiebbar und arretierbar ist.

7. Fußbodensystem nach einem der vorhergehenden Patentansprüche, **dadurch gekennzeichnet, dass** mindestens zwei Längsprofile (413), insbesondere mindestens zwei Sitzschienenprofile (413), auf mindestens zwei Querträgern (412) parallel zur y-Achse verschiebbar und arretierbar sind, um darauf mindestens ein Funktionselement (415, 416), insbesondere jeweils mindestens eine Sitzgruppe (417, 418) mit mindestens zwei Sitzen, zu befestigen.

8. Fußbodensystem nach einem der vorhergehenden Patentansprüche, **dadurch gekennzeichnet, dass** mindestens ein Stützelement (206, 207; 256, 257) zumindest abschnittsweise mittels mindestens einer Seitenanbindung (213; 263, 264), insbesondere einem Fachwerk, Dämpfern, Seilen oder Bändern, an die Rumpfzelle (200; 250) angebunden ist.

9. Fußbodensystem nach einem der vorhergehenden Patentansprüche, **dadurch gekennzeichnet, dass** mindestens zwei gegenüberliegende Stützelemente (556, 557) gegenüber parallel zur y-Achse wirkenden Kräften, insbesondere mittels beidseitig angeordneten dreieckförmigen Verstrebungen (562, 563) im Bereich von überkragenden Enden (560, 561) eines auf den beiden Stütelementen (556, 557) aufliegenden Querträgers (559), versteift sind.

10. Fußbodensystem nach einem der vorhergehenden Patentansprüche, **dadurch gekennzeichnet, dass** mindestens zwei Längsträger (604, 605) in dem oberen Bereich (603) der Rumpfzelle (600) befestigt sind und jeweils mindestens ein Stützelement (607, 608), insbesondere mindestens eine fachwerkartige Verstrebung, von jeweils einem Längsträger (604, 605) abgehängt ist und an den mindestens zwei Stützelementen (607, 608) jeweils mindestens ein Querträger zur Befestigung von Bodenelementen (611) angeordnet ist.

11. Fußbodensystem nach einem der vorhergehenden Patentansprüche mit mindestens einem Bodenelement (662; 800) das mindestens ein Funktionselement (664), insbesondere einen Sitz, eine Sitzgruppe, ein Küchenmodul (801) und/oder ein Sanitärmodul aufweist, um eine großflächige Krafteinleitung in das Fußbodensystem (202; 252; 302; 352; 402; 452; 502; 552; 602; 650) zu erreichen.

12. Fußbodensystem nach Patentanspruch 11, **dadurch gekennzeichnet, dass** ein Abstand zwischen zwei in Relation zur x-Achse hintereinander angeordneten Funktionselementen (664) stufenlos oder gestuft variierbar ist.

13. Fußbodensystem nach einem der Patentansprüche 11 oder 12, **dadurch gekennzeichnet, dass** eine Veränderung des Abstandes durch Ausgleichsbodenelemente (665) und/oder Bodenelemente (700) mit jeweils unterschiedlicher Länge erfolgt.

14. Fußbodensystem nach einem der Patentansprüche 11 bis 13, **dadurch gekennzeichnet, dass** die Veränderung des Abstandes durch teleskopierbare Bodenelemente (750) erfolgt.

15. Fußbodensystem nach einem der Patentansprüche 1 bis 10 in einer Rumpfzelle eines Flugzeugs, **dadurch gekennzeichnet, dass** das Bodenelement (622, 665) vorzugsweise eine Breite aufweist, die in etwa einem Abstand zwischen mindestens zwei Längsprofilen (659 - 661) entspricht, wobei das Bodenelement (622, 665) eine Länge aufweist, die in etwa einem Abstand zwischen mindestens zwei Querträgern (656 - 658) entspricht.

## Claims

1. Floor system (202; 252; 302; 352; 402; 452; 502; 552; 602; 650) for a fuselage cell (200; 250; 300; 350; 400; 450; 500; 550; 600; 651) of an aircraft, comprising a plurality of floor elements (262; 309 - 311; 360, 361; 464; 611; 622, 665; 700; 750; 800; 850) for forming a floor surface (261; 362; 612), comprising at least two longitudinal beams (204, 205; 254, 255; 304, 305; 354, 355; 404, 405; 454, 455; 504, 505; 554, 555; 604, 605; 652), which are fixed in a lower region (203; 253; 303; 353; 403; 453; 503; 553) or in an upper region (603) of the fuselage cell (200; 250; 300; 350; 400; 450; 500; 550; 600; 651) when installed and on each of which at least one support element (206, 207; 256, 257; 306, 307; 356 - 359; 406, 407; 456, 457; 506, 507, 508, 509; 556, 557; 607, 608; 653) is arranged, at least one transverse beam (212, 216; 259; 308; 412; 460; 510, 511; 559; 656 - 658) for mounting and fixing the floor elements (262; 309 - 311; 360, 361; 464; 611; 622, 665; 700; 750; 800; 850) being arranged on each of the at least two opposing support elements (206, 207; 256, 257; 306, 307; 356 - 359; 406, 407; 456, 457; 506 - 509; 556, 557; 607, 608; 653), resulting in the floor system (202; 252; 302; 352; 402; 452; 502; 552; 602; 650) being of a substantially self-supporting form and being largely mechanically decoupled from the fuselage cell (200; 250; 300; 350; 400; 450; 500; 550; 600; 651) as a primary structure.

2. Floor system according to claim 1, **characterised in that** the at least one support element (206, 207; 256, 257; 306, 307; 356 - 359; 406, 407; 456, 457; 506 - 509; 556, 557; 607, 608; 653) is formed as a framework-type strut.

3. Floor system according to either claim 1 or claim 2, **characterised in that** the support elements (306, 307) are of different fixed heights in relation to a z-axis.

4. Floor system according to either claim 1 or claim 2, **characterised in that** the height of the support elements (356 - 359) can be adjusted parallel to the z-axis.

5. Floor system according to any one of the preceding claims, **characterised in that** the support elements (506 - 509) can be displaced and locked parallel to an x-axis on the longitudinal beams (504, 505).

6. Floor system according to any one of the preceding claims, **characterised in that** at least one transverse beam (460) can be displaced and locked parallel to the x-axis on at least two support elements (456, 457).

7. Floor system according to any one of the preceding claims, **characterised in that** at least two longitudinal profiles (413), in particular at least two seat rail profiles (413), can be displaced and locked parallel to the y-axis on at least two transverse beams (412), so as to fix at least one functional element (415, 416) thereto, in particular in each case at least one seat group (417, 418) comprising at least two seats.

8. Floor system according to any one of the preceding claims, **characterised in that** at least one support element (206, 207; 256, 257) is connected to the fuselage (200; 250) at least in portions by means of at least one lateral connection (213; 263, 264), in particular a framework, attenuators, ropes or bands.

9. Floor system according to any one of the preceding claims, **characterised in that** at least two opposing support elements (556, 557) are reinforced against forces which act parallel to the y-axis, in particular by means of triangular struts (562, 563) arranged on both sides in the region of overhanging ends (560, 561) of a transverse beam (559) which is positioned on the two support elements (556, 557).

10. Floor system according to any one of the preceding claims, **characterised in that** at least two longitudinal beams (604, 605) are fixed in the upper region (603) of the fuselage cell (600) and in each case at least one support element (607, 608), in particular at least one framework-type strut, is suspended from one longitudinal beam (604, 605) in each case, and at least one transverse beam for fixing floor elements (611) is arranged on each of the at least two support elements (607, 608).

11. Floor system according to any one of the preceding claims, comprising at least one floor element (662; 800), which comprises at least one functional element (664), in particular a seat, a seat group, a kitchen module (801) and/or a sanitary module, so as to achieve an introduction of force into the floor system (202; 252; 302; 352; 402; 452; 502; 552; 602; 650) over a large area.

12. Floor system according to claim 11, **characterised in that** the distance between two functional elements which are arranged in succession in relation to the x-axis can be varied continuously or in steps.

13. Floor system according to either claim 11 or claim 12, **characterised in that** the distance is changed by way of compensating floor elements (665) and/or floor elements (700) which are each of a different length.

14. Floor system according to any one of claims 11 to 13, **characterised in that** the distance is changed by way of telescoping floor elements (750).

15. Floor system according to any one of claims 1 to 10 in a fuselage cell of an aircraft, **characterised in that** the floor element (622, 665) is preferably of a width which approximately corresponds to the distance between at least two longitudinal profiles (659 - 661), the floor element (622, 665) being of a length which approximately corresponds to the distance between at least two transverse beams (656 - 658).

## Revendications

1. Système de plancher (202 ; 252 ; 302 ; 352 ; 402 ; 452 ; 502 ; 552 ; 602 ; 650) pour un compartiment du fuselage (200 ; 250 ; 300 ; 350 ; 400 ; 450 ; 500 ; 550 ; 600 ; 651) d'un avion avec une multitude d'éléments de sol (262 ; 309 - 311 ; 360, 361 ; 464 ; 611 ; 622, 665 ; 700 ; 750 ; 800 ; 850) pour la formation d'une surface de plancher (261 ; 362 ; 612), avec au moins deux longerons longitudinaux (204, 205 ; 254, 255 ; 304, 305 ; 354, 355 ; 404, 405 ; 454, 455 ; 504, 505 ; 554, 555 ; 604, 605 ; 652), qui sont fixés à l'état monté dans une zone inférieure (203 ; 253 ; 303 ; 353 ; 403 ; 453 ; 503 ; 553) ou dans une zone supérieure (603) du compartiment du fuselage (200 ; 250 ; 300 ; 350 ; 400 ; 450 ; 500 ; 550 ; 600 ; 651) et sur lesquels est disposé respectivement au moins un élément support (206, 207 ; 256, 257 ; 306, 307 ; 356 - 359 ; 406, 407 ; 456, 457 ; 506, 507, 508, 509 ; 556, 557 ; 607, 608 ; 653), respectivement au moins un longeron transversal (212, 216 ; 259 ; 308 ; 412 ; 460 ; 510, 511 ; 559 ; 656 - 658) étant disposé sur les au moins deux éléments supports en regard (206, 207 ; 256, 257 ; 306, 307 ; 356 - 359 ; 406, 407 ; 456, 457 ; 506 - 509 ; 556, 557 ; 607, 608 ; 653) pour l'appui et la fixation des éléments de sol (262 ; 309 - 311 ; 360, 361 ; 464 ; 611 ; 622, 665 ; 700 ; 750 ; 800 ; 850), le système de plancher (202 ; 252 ; 302 ; 352 ; 402 ; 452 ; 502 ; 552 ; 602 ; 650) étant ainsi essentiellement autoporteur et désaccouplé sur le plan mécanique dans une large mesure du compartiment du fuselage (200 ; 250 ; 300 ; 350 ; 400 ; 450 ; 500 ; 550 ; 600 ; 651) en tant que structure primaire.

2. Système de plancher selon la revendication 1, **caractérisé par le fait que** l'au moins un élément support (206, 207 ; 256, 257 ; 306, 307 ; 356 - 359 ; 406, 407 ; 456, 457 ; 506 - 509 ; 556, 557 ; 607, 608 ; 653) est formé comme un entretoisement en treillis.

3. Système de plancher selon la revendication 1 ou 2, **caractérisé par le fait que** les éléments supports (306, 307) présentent différentes hauteurs fixes en relation avec un axe z.

4. Système de plancher selon la revendication 1 ou 2, **caractérisé par le fait que** les éléments supports (356 - 359) sont réglables en hauteur parallèlement à l'axe z.

5. Système de plancher selon l'une des revendications précédentes, **caractérisé par le fait que** les éléments supports (506 - 509) peuvent coulisser et être bloqués sur les longerons longitudinaux (504, 505) parallèlement à un axe x.

6. Système de plancher selon l'une des revendications précédentes, **caractérisé par le fait qu'**au moins un longeron transversal (460) peut coulisser et être bloqué sur au moins deux éléments supports (456, 457) parallèlement à l'axe x.

7. Système de plancher selon l'une des revendications précédentes, **caractérisé par le fait qu'**au moins deux profils longitudinaux (413), en particulier au moins deux profilés de rail de siège (413), peuvent coulisser et être bloqués sur au moins deux longerons transversaux (412) parallèlement à un axe y, pour y fixer au moins un élément fonctionnel (415, 416), en particulier respectivement au moins un groupe de sièges (417, 418) avec au moins deux sièges.

8. Système de plancher selon l'une des revendications précédentes, **caractérisé par le fait qu'**au moins un élément support (206, 207 ; 256, 257) est lié au moins en partie au moyen au moins d'une liaison latérale (213 ; 263, 264), en particulier d'un treillis, d'amortisseurs, de câbles ou d'entretoises, au compartiment du fuselage (200 ; 250).

9. Système de plancher selon l'une des revendications précédentes, **caractérisé par le fait qu'**au moins deux éléments supports (556, 557) en regard sont rigidifiés par rapport à des forces agissant parallèlement à l'axe y, en particulier au moyen d'entretoisements (562, 563) triangulaires disposés des deux côtés dans la zone d'extrémités (560, 561) en saillie d'un longeron transversal (559) reposant sur les deux éléments supports (556, 557).

10. Système de plancher selon l'une des revendications précédentes, **caractérisé par le fait qu'**au moins deux longerons longitudinaux (604, 605) sont fixés dans la zone supérieure (603) du compartiment du fuselage (600) et respectivement au moins un élément support (607, 608), en particulier au moins un entretoisement en treillis, est suspendu respectivement à un longeron longitudinal (604, 605) et respectivement au moins un longeron transversal est disposé sur les au moins deux éléments supports (607, 608) pour la fixation d'éléments de sol (611).

11. Système de plancher selon l'une des revendications précédentes avec au moins un élément de sol (662 ; 800) qui présente au moins un élément fonctionnel (664), en particulier un siège, un groupe de sièges, un module cuisine (801) et/ou un module sanitaire, pour atteindre une application de force sur une grande surface dans le système de plancher (202 ; 252 ; 302 ; 352 ; 402 ; 452 ; 502 ; 552 ; 602 ; 650).

12. Système de plancher selon la revendication 11, **caractérisé par le fait qu'**une distance entre deux éléments fonctionnels (664) disposés l'un derrière l'autre en relation avec l'axe x est variable en continu ou par palier.

13. Système de plancher selon l'une des revendications 11 ou 12, **caractérisé par le fait qu'**une modification de la distance est effectuée par des éléments de sol compensateurs (665) et/ou des éléments de sol (700) d'une longueur respectivement différente.

14. Système de plancher selon l'une des revendications 11 à 13, **caractérisé par le fait que** la modification de la distance est effectuée par des éléments de sol (750) télescopiques.

15. Système de plancher selon l'une des revendications 1 à 10 dans un compartiment du fuselage d'un avion, **caractérisé par le fait que** l'élément de sol (622, 665) présente préférentiellement une largeur qui correspond approximativement à une distance entre au moins deux profils longitudinaux (659 - 661), l'élément de sol (622, 665) présentant une longueur qui correspond approximativement à une distance entre au moins deux longerons transversaux (656 - 658).
